(19)

**Europäisches Patentamt**
**European Patent Office**
**Office européen des brevets**

(11)  **EP 3 833 118 A1**

(12)  # EUROPEAN PATENT APPLICATION
published in accordance with Art. 153(4) EPC

(43)  Date of publication:
**09.06.2021  Bulletin 2021/23**

(21)  Application number: **18928612.3**

(22)  Date of filing: **02.08.2018**

(51)  Int Cl.:
*H04W 52/22* (2009.01)     *H04W 52/08* (2009.01)
*H04W 52/54* (2009.01)     *H04W 72/12* (2009.01)

(86)  International application number:
**PCT/JP2018/029137**

(87)  International publication number:
**WO 2020/026425 (06.02.2020 Gazette 2020/06)**

(84)  Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(71)  Applicant: **NTT DoCoMo, Inc.**
**Tokyo 100-6150 (JP)**

(72)  Inventors:
• **YOSHIOKA, Shohei**
  **Tokyo 100-6150 (JP)**

• **TAKEDA, Kazuki**
  **Tokyo 100-6150 (JP)**
• **NAGATA, Satoshi**
  **Tokyo 100-6150 (JP)**
• **WANG, Lihui**
  **Beijing 100190 (CN)**

(74)  Representative: **Hoffmann Eitle**
**Patent- und Rechtsanwälte PartmbB
Arabellastraße 30
81925 München (DE)**

(54)  **USER EQUIPMENT AND WIRELESS COMMUNICATION METHOD**

(57)  A user terminal includes: a receiving section that receives a plurality of pieces of downlink control information corresponding to a plurality of uplink channels, respectively, each of the plurality of pieces of downlink control information including information indicating a resource of the uplink channels and a transmission power control (TPC) command; and a control section that, when a transmission order of the plurality of uplink channels is different from a receiving order of the corresponding downlink control information, determines at least one accumulated value of the TPC command for the plurality of uplink channels. According to an aspect of the present disclosure, transmission power of an uplink channel can be appropriately controlled.

FIG. 3

**Description**

Technical Field

The present invention relates to a user terminal and a radio communication method in next-generation mobile communication systems.

Background Art

In the UMTS (Universal Mobile Telecommunications System) network, the specifications of long term evolution (LTE) have been drafted for the purpose of further increasing high speed data rates, providing lower delays and the like (see Non-Patent Literature 1). In addition, the specifications of LTE-A (LTE Advanced, LTE Rel. 10, 11, 12, and 13) have been drafted for the purpose of further increasing the capacity and enhancement of LTE (LTE Rel. 8 and 9).

Successor systems of LTE (for example, FRA (Future Radio Access), 5G (5th generation mobile communication system), 5G+ (plus), NR (New Radio), NX (New radio access), FX (Future generation radio access), LTE Rel. 14 or 15 or later versions) are also under study.

In an existing LTE system (for example, LTE Rel. 8-13, hereinafter simply referred to as LTE), a user terminal controls the transmission power of the uplink control channel (for example, Physical Uplink Control Channel (PUCCH)) on the basis of a Transmission Power Control (TPC) command indicated by a predetermined field (TPC field) value in downlink control information (DCI).

Citation List

Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

Summary of Invention

Technical Problem

In LTE, the DCI that schedules PDSCH does not include a field dedicated to the resource (PUCCH resource) for the uplink control channel, and the TPC command field value is used as an indicator (ACK/NACK resource indicator (ARI)) or an ACK/NACK resource offset (ARO) of the PUCCH resource under predetermined conditions.

On the other hand, it is expected that, in future wireless communication systems (hereinafter, also simply referred to as NR), the DCI that schedules PDSCH includes a field for an indicator of the resource for the uplink control channel (PUCCH resource indicator/indication (PRI), also referred to as ARI, ARO or the like) separately from the TPC command field.

In NR, it is expected that the DCI that schedules PUSCH includes a TPC command field and a field that indicates a PUSCH resource.

In NR, the problem is how to use the TPC command field value of each DCI. When a plurality of DCIs associated with each of a plurality of uplinks are detected, the TPC commands indicated by at least one TPC command field value of the plurality of DCIs are not properly accumulated, and as a result, there is a possibility that the transmission power of the uplink channel cannot be controlled appropriately.

The present invention has been made in view of the above point, and an object of the present invention is to provide a user terminal and a wireless communication method capable of appropriately controlling transmission power of an uplink channel.

Solution to Problem

A user terminal according to an aspect of the present disclosure includes: a receiving section that receives a plurality of pieces of downlink control information corresponding to a plurality of uplink channels, respectively, each of the plurality of pieces of downlink control information including information indicating a resource of the uplink channels and a transmission power control (TPC) command; and a control section that, when a transmission order of the plurality of uplink channels is different from a receiving order of the corresponding downlink control information, determines at least one accumulated value of the TPC command for the plurality of uplink channels.

Advantageous Effects of Invention

According to the present invention, transmission power of an uplink channel can be appropriately controlled.

Brief Description of Drawings

Figs. 1A and 1B are diagrams to show an example of the order of PUCCH in a normal UE.
Figs. 2A and 2B are diagrams to show an example of the order of PUSCH in a normal UE.
Fig. 3 is a diagram showing an example of accumulation of TPC commands according to a mode 1-1.
Figs. 4A and 4B are diagrams to show an example of accumulation of TPC commands according to a mode 1-2.
Fig. 5 is a diagram showing an example of accumulation of TPC commands according to a mode 1-3.
Fig. 6 is a diagram showing another example of accumulation of TPC commands according to the mode 1-3.
Figs. 7A and 7B are diagrams to show an example of accumulation of TPC commands according to a mode 1-4.
Fig. 8 is a diagram showing an example of accumulation of TPC commands according to a mode 2-1.
Figs. 9A and 9B are diagrams to show an example of accumulation of TPC commands according to a mode 2-2.
Fig. 10 is a diagram showing an example of accumulation of TPC commands according to a mode 2-3.
Fig. 11 is a diagram showing another example of accumulation of TPC commands according to the mode 2-3.
Figs. 12A and 12B are diagrams to show an example of accumulation of TPC commands according to a mode 2-4.
Fig 13 is a diagram showing an example of a schematic structure of a radio communication system according to the present embodiment.
Fig 14 is a diagram showing an example of an overall structure of a radio base station according to the present embodiment.
Fig 15 is a diagram showing an example of a functional structure of a radio base station according to the present embodiment.
Fig 16 is a diagram showing an example of an overall structure of a user terminal according to the present embodiment.
Fig 17 is a diagram showing an example of a functional structure of a user terminal according to the present embodiment.
Fig 18 is a diagram showing an example of a hardware structure of a radio base station and a user terminal according to the present embodiment.

Description of Embodiments

(Service)

NR is expected to involve a plurality of types of services (also referred to as use cases, communication types, communication, and the like) under different communication requirements (requirements) examples of which include: higher speed and larger capacity (enhanced Mobile Broad Band (eMBB), for example), a massive amount of terminals (massive Machine Type Communication (mMTC), Internet of Things (IoT), for example), and ultrahigh reliability and low latency (Ultra Reliable and Low Latency Communications (URLLC), for example). The communication requirement may be any requirement related to at least one of latency, reliability, capacity, speed, and performance, for example.
For example, the difference between URLLC communication requirements and eMBB communication requirements may be that the URLLC latency is lower than the eMBB latency, or that the URLLC communication requirements include reliability communication requirements. For example, the eMBB U-plane latency requirements may include that the downlink U-plane latency is 4 ms and the uplink U-plane latency is 4 ms. On the other hand, the U-plane latency requirements of URLLC may include that the U-plane latency of the downlink is 0.5 ms and the U-plane latency of the uplink is 0.5 ms. The URLLC reliability requirements may also include that a 32-byte error rate is $10^{-5}$ at a U-plane latency of 1 ms.
At least part of the configuration information may differ between URLLC and eMBB. The configuration information may be at least one of a MCS table and a CQI table. The configuration information for eMBB and the configuration information for URLCC may be specified in the specifications.
Introduction of a new MCS table for URLLC has been considered and instruction of a new MCS table by higher layer (RRC) parameters (for example, mcs-table, MCS table information) or a new RNTI has been considered.
An upper layer parameter mcs-table may indicate one MCS table selected from three MCS tables (existing 64QAM MCS table, existing 256QAM MCS table, and new 64QAM MCS table).
A user equipment (UE, user terminal, terminal, or the like) may select the MCS table on the basis of the RNTI used for CRC scrambling of the DCI. If a new RNTI is configured, the UE may apply the MCS table associated with the RNTI used to scramble CRC of the DCI for scheduling the PUSCH to the PUSCH.

Each of the plurality of types of RNTIs may be associated with communication requirements (eMBB, URLLC, or the like) or the MCS table (MCS table for eMBB, MCS table for URLLC, or the like). The RNTI associated with the URLLC or MCS table for URLLC (for example, the new RNTI) may be different from the RNTI associated with the eMBB or MCS table for eMBB (for example, C-RNTI).

The new RNTI may be called RNTI for URLLC, URLLC-RNTI, Y-RNTI, and the like.

If the CRC of DCI is scrambled with the new RNTI, the UE may use the new MCS table (new 64QAM MCS table, MCS table for URLLC). If not, the UE may follow the existing operation. For example, if the CRC of DCI is scrambled with a different RNTI (for example, C-RNTI) than the new RNTI, the UE may use the existing MCS table (64QAM MCS table or 256QAM MCS table, MCS table for eMBB).

(PUCCH format)

In NR, configurations (also referred to as formats, PUCCH formats (PFs), and the like) for uplink control channels (for example, PUCCH) for use in uplink control information (UCI) transmission are under study.

The UCI may include at least one of transmission confirmation information (Hybrid Automatic Repeat reQuest Acknowledge (HARQ-ACK), ACKnowledge/Non-ACK (ACK/NACK)) for downlink shared channel (for example, Physical Downlink Shared Channel (PDSCH)), scheduling request (SR), and channel state information (CSI).

For example, for NR, the following PUCCH formats has been considered:

- PUCCH format (also referred to as PF0, short PUCCH, or the like), which is used to transmit 1 or 2 bit UCI (for example, at least one of HARQ-ACK and SR) and is transmitted with 1 or 2 symbols,
- PUCCH format (also referred to as PF1, long PUCCH, or the like), which is used to transmit 1 or 2 bit UCI (for example, at least one of HARQ-ACK and SR) and is transmitted with 4 or more symbols,
- PUCCH format (also referred to as PF2, short PUCCH, or the like), which is used to transmit UCI larger than 2 bits and is transmitted with 1 or 2 symbols,
- PUCCH format (also referred to as PF3, long PUCCH, or the like), which is used to transmit UCI larger than 2 bits and is transmitted with 4 or more symbols, and
- PUCCH format (also referred to as PF4, long PUCCH, or the like), which is used to transmit UCI larger than 2 bits, is transmitted with 4 or more symbols, and has a PUCCH resource containing an Orthogonal Cover Code (OCC).

The PUCCH in the PUCCH format as described above may be transmitted in a specific cell in a group including one or more cells (also referred to as a cell group (CG), a PUCCH group, or the like). The specific cell may be, for example, a primary cell (PCell), a primary secondary cell (PSCell), a PUCCH transmission secondary cell (Secondary Cell (SCell), PUCCH SCell), and other cells. Note that the "cell" may be also referred to as a serving cell, a component carrier (CC), a carrier, or the like.

(PUCCH resource)

Further, for NR, a set of one or more resources (PUCCH resources) for PUCCH may be configured by higher layer signaling. The configuration by higher layer signaling may be notification of configuration information from the base station (also referred to as base station (BS), transmission/reception point (TRP), eNodeB (eNB), NR NodeB (gNB), or the like) to the user terminal (also referred to as user equipment (UE), terminal, mobile station (MS), or the like).

The higher layer signaling is only required to be, for example, at least one of the following:

- Radio Resource Control (RRC) signaling,
- Medium Access Control (MAC) signaling (for example, MAC Control Element (CE), Protocol Data Unit (MAC PDU)),
- Information transmitted by broadcast channel (for example, Physical Broadcast Channel (PBCH)) (for example, Master Information Block (MIB)), and
- System information (for example, System Information Block (SIB), Remaining Minimum System Information (RMSI), Other System Information (OSI)).

For example, a set including one or more PUCCH resources (PUCCH resource set) may be set by higher layer signaling for each partial bandwidth (bandwidth part (BWP)) configured in CC.

Each PUCCH resource in the PUCCH resource set configured by the higher layer signaling may be associated with each value of a predetermined field (also referred to as PUCCH resource indicator (PUCCH resource indicator/indication (PRI) field), ACK/NACK resource indicator (ARI) field, ACK/NACK resource offset (ARO) field, second field, or the like) in DCI. The DCI may be DCI (DL assignment, DCI format 1_0 or 1_1) used for PDSCH scheduling.

The user terminal determines the PUCCH resource used to transmit the UCI on the basis of the value of the PRI field in the DCI. The PRI field may be x bits (for example, x = 3). If the PUCCH resource set contains PUCCH resources less than or equal to 2 to the xth power (for example, 8 if x = 3), the user terminal may determine the PUCCH resource associated with the value of the PRI field for UCI transmission.

On the other hand, if the PUCCH resource set contains PUCCH resources that exceed 2 to the xth power (for example, 8 if x = 3), the user terminal may determine the PUCCH resources for UCI transmission on the basis of other parameters in addition to the values in the PRI field (also referred to as $\Delta_{PRI}$, PRI, ARI, ARO, or the like). The other parameters may include at least one of the following:

- The number ($N_{CCE, p}$) of the control channel element (CCE) in the control resource set (CORESET) p for receiving the downlink control channel (for example, Physical Downlink Control Channel (PDCCH)) that transmits DCI including the PRI field.
- Index ($n_{CCE, p}$, CCE index) of the CCE (for example, the first CCE) for receiving the downlink control channel.

Each PUCCH resource may include at least one of, for example, the number of symbols assigned to PUCCH, the start index of symbols, the resource block assigned to PUCCH (also referred to as Physical Resource Block (PRB)), the start index of the resource block, whether or not frequency hopping is applied in the slot, and the start index of the PRB of the second hop when frequency hopping is applied.

Each PUCCH resource may be associated with the above PUCCH format, and may include the associated PUCCH format-specific resource (for example, initial cyclic shift of PF0, OCC in the time domain of PF1, OCC length of PF4, or OCC index).

(Transmission power control for PUCCH)

In NR, the transmission power of PUCCH is controlled on the basis of the TPC command (also referred to as value, increase/decrease value, correction value, or the like) indicated by the value of a predetermined field (also referred to as TPC command field, first field or, the like) in DCI.

For example, the transmission power of PUCCH ($P_{PUCCH, b, f, c}$ (i, $q_u$, $q_d$, l)) at transmission occasion (also referred to as transmission period or the like) i for BWP b of carrier f of the cell c using the power control adjustment state index 1 may be expressed by Formula (1) below.

Here, the power control adjustment state may be set by whether there are a plurality of states (for example, two states) or a single state by the higher layer parameter. When a plurality of power control adjustment states are set, one of the plurality of power control adjustment states may be identified by the index l (for example, l ∈ {0,1}). The power control adjustment state may be referred to as a PUCCH power control adjustment state, a first or second state, or the like.

The PUCCH transmission occasion i is a predetermined period during which the PUCCH is transmitted, and may be composed of, for example, one or more symbols, one or more slots, and the like.

[Equation 1]

$$P_{\text{PUCCH},b,f,c}(i,q_u,q_d,l) = \min \begin{cases} P_{\text{CMAX},f,c}(i), \\ P_{\text{O\_PUCCH},b,f,c}(q_u) + 10\log_{10}(2^{\mu} \cdot M_{\text{RB},b,f,c}^{\text{PUCCH}}(i)) + PL_{b,f,c}(q_d) + \Delta_{\text{F\_PUCCH}}(F) + \Delta_{\text{TF},b,f,c}(i) + g_{b,f,c}(i,l) \end{cases}$$

Formula (1)

In Formula (1), $P_{CMAX,f,c}(i)$ is, for example, the transmission power (also referred to as the maximum transmission power or the like) of the user terminal set for the carrier f of the cell c in the transmission occasion i. $P_{O\_PUCCH,b,f,c}(q_u)$ are, for example, parameters related to the target received power set for BWP b of carrier f of the cell c at transmission occasion i (also referred to as, for example, parameters related to transmission power offset, transmission power offset P0, or target received power parameter).

$M^{PUCCH}_{RB, b, f, c}(i)$ is, for example, the number of resource blocks (bandwidth) assigned to PUCCH for the transmission occasion i in the uplink BWP b of the carrier f of the cell c and the subcarrier spacing $\mu$. $PL_{b,f,c}(q_d)$ is, for example, a path-loss calculated by the user terminal using the index $q_d$ of the reference signal for the downlink BWP associated with the uplink BWP b of the carrier f of the cell c.

$\Delta_{F\_PUCCH}(F)$ is a higher layer parameter given for each PUCCH format. $\Delta_{TF, b, f, c}(i)$ is a transmission power adjustment component (offset) for the uplink BWP b of the carrier f of cell c.

$g_{b,f,c}(i,l)$ is a value based on the TPC command of the power control adjustment state index l of the upstream BWP of the carrier f of the cell c and the transmission occasion i (for example, the accumulated value of the TPC command). For example, the accumulated value of the TPC command may be expressed by Formula (2).
[Equation 2]

$$g_{b,f_C}(i,l) = g_{b,f_C}(i_{\text{last}},l) + \delta_{\text{PUCCH},b,f_C}(i_{\text{last}},i,K_{\text{PUCCH}},l)$$

Formula (2)

In Formula (2), $\delta_{\text{PUCCH},b,f,c}(i_{\text{last}},i,K_{\text{PUCCH}},l)$ may be, for example, a TPC command indicated by a TPC command field value in the DCI (for example, DCI format 1_0 or 1_1) detected in the uplink BWP b of the carrier f of the cell c for the transmission occasion i after the previous transmission occasion $i_{\text{last}}$ of PUCCH, or a TPC command indicated by a TPC command field value in the DCI (for example, DCI format 2_2) that has CRC parity bits to be scrambled by a specific radio network temporary identifier (RNTI) (for example, TPC-PUCCH-RNTI) (that is to be CRC scrambled).
Formulae (1) and (2) are merely examples and are not limitation. The user terminal may control the transmission power of the PUCCH on the basis of at least one parameter exemplified in Formulae (1) and (2), additional parameters may be included, or some parameters may be omitted. In Formulae (1) and (2), the transmission power of the PUCCH is controlled for each BWP of a certain carrier of a certain cell, but the present invention is not limited to this. At least some of the cell, carrier, BWP, and power control adjustment states may be omitted.

(PUSCH resource)

In NR, the DCI for scheduling the PUSCH (for example, DCI formats 0_0, 0_1) may specify the PUSCH resource. This DCI may include a frequency domain resource assignment field and a time domain resource assignment field to indicate PUSCH resources.
The UE may be configured with periodic PUSCH resources by higher layer signaling (configured grant transmission). The UE may initiate transmission using PUSCH resources in response to higher layer signaling only (type 1), or initiate transmission using PUSCH resources in response to higher layer signaling and activation (for example, DCI) (type 2).

(Transmission power control for PUSCH)

In NR, the transmission power of PUSCH is controlled on the basis of the TPC command (also referred to as value, increase/decrease value, correction value, or the like) indicated by the value of a predetermined field (also referred to as TPC command field, first field, or the like) in DCI.
For example, if the UE uses a parameter set with an index j (open loop parameter set) and a power control adjusted state index I to transmit PUSCH on BWP b of the carrier f of the cell c, the transmission power of PUSCH ($P_{\text{PUSCH, b, f, c}}(i, j, q_d, l)$) at PUSCH transmission occasion (also referred to as transmission period or the like) i may be expressed by Formula (3) below.
Here, the power control adjustment state may be set by whether there are a plurality of states (for example, two states) or a single state by the higher layer parameter. When a plurality of power control adjustment states are set, one of the plurality of power control adjustment states may be identified by the index I (for example, $I \in \{0,1\}$). The power control adjustment state may be referred to as a PUSCH power control adjustment state, a first or second state, or the like.
The PUSCH transmission occasion i is a predetermined period during which the PUSCH is transmitted, and may be composed of, for example, one or more symbols, one or more slots, and the like.
[Equation 3]

$$P_{\text{PUSCH},b,f,c}(i,j,q_d,l) = \min\left\{\begin{array}{l} P_{\text{CMAX},f,c}(i), \\ P_{\text{O\_PUSCH},b,f,c}(j) + 10\log_{10}(2^{\mu} \cdot M_{\text{RB},b,f,c}^{\text{PUSCH}}(i)) + \alpha_{b,f,c}(j) \cdot PL_{b,f,c}(q_d) + \Delta_{\text{TF},b,f,c}(i) + f_{b,f,c}(i,l) \end{array}\right\}$$

Formula (3)

In Formula (3), $P_{\text{CMAX, f, c}}(i)$ is, for example, the transmission power (also referred to as the maximum transmission power or the like) of the user terminal set for the carrier f of the cell c in the transmission occasion i. $P_{\text{O\_PUSCH, b, f, c}}(j)$ are, for example, parameters related to the target received power set for BWP b of carrier f of cell c at transmission occasion i (also referred to as, for example, parameters related to transmission power offset, transmission power offset P0, or target received power parameter).

$M^{PUSCH}_{RB, b, f, c}(i)$ is, for example, the number of resource blocks (bandwidth) assigned to PUSCH for the transmission occasion i in the uplink BWP b of the carrier f of the cell c and the subcarrier spacing μ. $\alpha_{b, f, c}(j)$ are values provided by the higher layer parameters (for example, also referred to as msg3-Alpha, p0-PUSCH-Alpha, or fractional factors).

$PL_{b, f, c}(q_d)$ is, for example, a path-loss calculated by the user terminal using the index $q_d$ of the reference signal for the downlink BWP associated with the uplink BWP b of the carrier f of cell c (path-loss compensation).

$\Delta_{TF, b, f, c}(i)$ is a transmission power adjustment component (offset, transmission format compensation) for the uplink BWP b of the carrier f of cell c.

$f_{b, f, c}(i, l)$ is a value based on the TPC command of the power control adjustment state index 1 of the upstream BWP of the carrier f of the cell c and the transmission occasion i (for example, the accumulated value of the TPC command or a value by closed loop). For example, the accumulated value of the TPC command may be expressed by Formula (4).

[Equation 4]

$$f_{b,f,c}(i,l) = f_{b,f,c}(i_{last},l) + \delta_{PUSCH,b,f,c}(i_{last},i,K_{PUSCH},l)$$

$$\text{Formula (4)}$$

In Formula (4), $\delta_{PUSCH, b, f, c}(i_{last}, i, K_{PUSCH}, l)$ may be, for example, a TPC command indicated by a TPC command field value in the DCI (for example, DCI format 0_0 or 0_1) detected in the uplink BWP b of the carrier f of the cell c for the transmission occasion i after the previous transmission occasion $i_{last}$ of PUSCH, or a TPC command indicated by a TPC command field value in the DCI (for example, DCI format 2_2) that has CRC parity bits to be scrambled by a specific radio network temporary identifier (RNTI) (for example, TPC-PUSCH-RNTI) (that is to be CRC scrambled).

Formulae (3) and (4) are merely examples and are not limitation. The user terminal may control the transmission power of the PUSCH on the basis of at least one parameter exemplified in Formulae (3) and (4), additional parameters may be included, or some parameters may be omitted. In Formulae (3) and (4), the transmission power of the PUSCH is controlled for each BWP of a certain carrier of a certain cell, but the present invention is not limited to this. At least some of the cell, carrier, BWP, and power control adjustment states may be omitted.

As described above, when the transmission power of PUCCH or PUSCH is controlled on the basis of the accumulated value of TPC commands, if a plurality of DCIs including a TPC command field value are detected, in which DCI a TPC command indicated by a TPC command field value is to be accumulated is a problem.

(UE operation for TPC command)

In NR, as the transmission order of the uplink channel scheduled (or of which transmission timing is specified) on the basis of the downlink control information (or downlink control channel), it has been considered that a flexible transmission order or scheduling order is applied to a predetermined UE on the basis of the UE capability or the like. For example, assume that the transmission timing of the uplink channel (for example, PUCCH or PUSCH) is specified by the downlink control information (for example, DCI) transmitted in different slots.

In this case, for UEs that support a flexible scheduling order, a configuration is allowed in which the transmission timing of each DCI and the order of the uplink channels scheduled by each DCI are switched. On the other hand, for UEs that do not support a flexible scheduling order, a configuration is not allowed in which the transmission timing of each DCI and the order of the uplink channels scheduled by each DCI are switched.

In the following description, a UE that does not support a flexible scheduling order is also referred to as a normal UE that does not have a specific capability (has a baseline capability). A UE that supports a flexible scheduling order is also referred to as an advanced UE having a specific capability. The UE may transmit UE capability signaling to the gNB indicating whether it is a normal UE or an advanced UE. The advanced UE may be a UE that transmits UE capability signaling indicating that the UE is an advanced UE (having a specific capability).

Regarding the scheduling order of PUCCH or PUSCH for normal UE that does not support a flexible scheduling order, it has been considered to follow the operations 1 and 2 below.

<Operation 1>

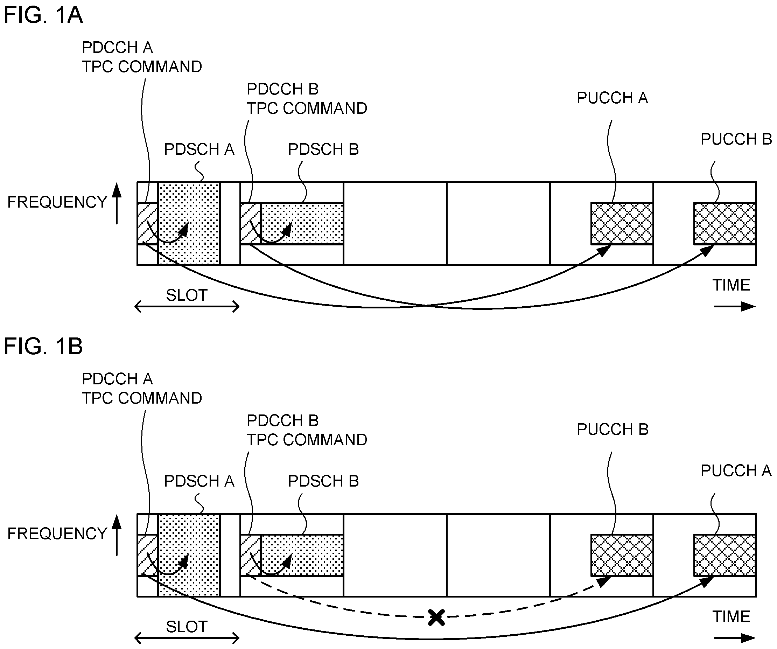

As shown in Fig. 1A, for two HARQ process IDs A and B in a given cell, when unicast PDSCH transmission scheduled for A is earlier in time than unicast PDSCH transmission scheduled for B, the normal UE expects to transmit a HARQ-ACK for B after the HARQ-ACK for A.

On the other hand, as shown in Fig. 1B, for two HARQ process IDs A and B in a given cell, when unicast PDSCH transmission scheduled for A is earlier in time than unicast PDSCH transmission scheduled for B, the normal UE does not expect to transmit a HARQ-ACK for A after the HARQ-ACK for B.

This operation 1 does not preclude the capability of a future UE to support HARQ-ACKs that do not follow the scheduled order.

<Operation 2>

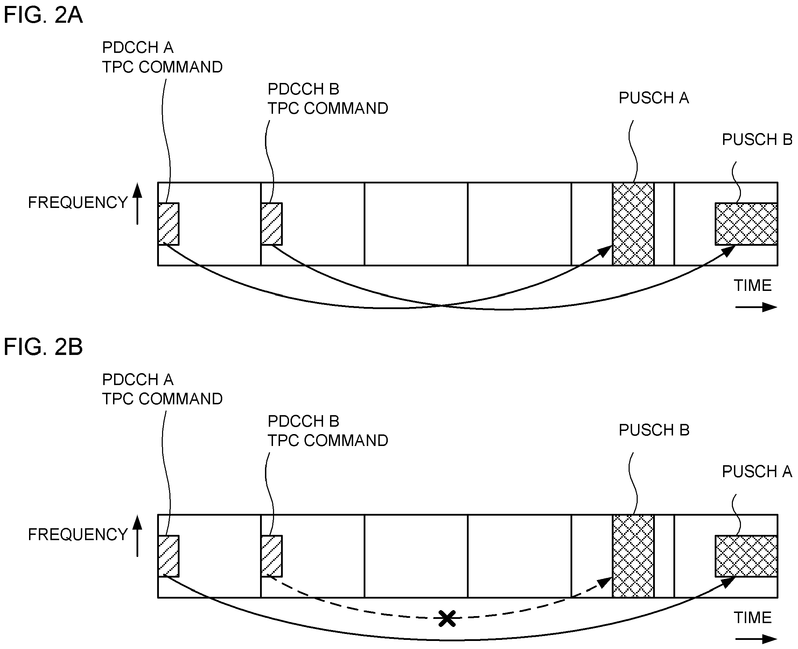

As shown in Fig. 2A, for two HARQ process IDs A and B in a given cell, when a DCI with a CRC scrambled by C-RNTI for scheduling PUSCH transmissions for A is earlier in time than a DCI with a CRC scrambled by C-RNTI for scheduling PUSCH transmission for B, the normal UE expects that the PUSCH for A is scheduled to be before the PUSCH for B.

On the other hand, as shown in Fig. 2B, for two HARQ process IDs A and B in a given cell, when a DCI with a CRC scrambled by C-RNTI for scheduling PUSCH transmissions for A is earlier in time than a DCI with a CRC scrambled by C-RNTI for scheduling PUSCH transmission for B, the normal UE does not expect that the PUSCH for B is scheduled to be before the PUSCH for A.

This operation 2 does not preclude a capability of a future UE to support PUSCHs that are not according to the scheduled order.

On the other hand, it is also conceivable to apply the PUCCH or PUSCH scheduling order shown in Figs. 1B and 2B to the advanced UE that supports a flexible scheduling order. On the other hand, when the transmission orders of the uplink channels scheduled for each DCI transmitted at different timings (for example, different slots) are different from each other, how to control the UL transmission power to which the TPC command included in the DCI is applied is a problem. Specifically, for PUCCH or PUSCH, the operation for the advanced UE for TPC commands in the situations shown in Figs. 1B and 2B has not been clearly determined.

As described above, when the UE transmits a plurality of PUCCHs (for example, HARQ-ACK) or a plurality of PUSCHs on the basis of the plurality of DCIs, the TPC command indicated by the TPC command field value included in each of the plurality of DCIs is not properly accumulated, and as a result, the transmission power of the PUCCH or PUSCH may not be properly controlled.

Therefore, the present inventors have studied a method for appropriately controlling the transmission power of a plurality of PUCCHs or a plurality of PUSCHs on the basis of a plurality of DCIs, and have achieved the present invention.

Hereinafter, embodiments according to the present disclosure will be described in detail with reference to the drawings. The radio communication method according to each of the embodiments may be applied independently, or may be applied in combination with others.

In the present embodiment, the number of symbols assigned to the PUCCH may be at least a part of the slot, and may be applied to control of the transmission power of any PUCCH format. In the present embodiment, the number of symbols assigned to PUSCH may be at least a part of the slot.

In the present embodiment, the TPC command field value in each DCI may indicate an increase or decrease value (dB) of the transmission power. For example, the TPC command field values "0", "1", "2", and "3" may indicate -1, 0, +1, and +3 [dB], respectively. The increase or decrease value and the correspondence between the values are not limited to these.

(Mode 1)

In Mode 1, for two HARQ process IDs A and B in a given cell, when unicast PDSCH transmission scheduled for A (PDSCH A) is earlier in time than unicast PDSCH transmission scheduled for B (PDSCH B), the normal UE may transmit a HARQ-ACK for A (PUCCH A) after the HARQ-ACK for B (PUCCH B).

The UE may be an advanced UE (a UE having a specific capability, a UE that transmits capability information indicating that the UE has a specific capability).

The UE may use at least one of PUCCH A or PUCCH B to transmit uplink control information (UCI) including at least one of HARQ-ACK, channel state information (CSI), and a scheduling request (SR).

The DCI (DCI A) that schedules PDSCH A and the DCI (DCI B) that schedules PDSCH B may be referred to as a DCI group. PUCCH B and PUCCH A may be referred to as a PUCCH group. This mode may be applied when the order of the PUCCH group is different from the order of the corresponding DCI group. This mode may be applied when the order of three or more PUCCHs is different from the order of the corresponding three or more DCIs.

At the transmission occasion i of the PUCCH, the UE may control the PUCCH transmission power at the transmission occasion i on the basis of the accumulated value (for example, $g_{b, f, c}(i, l)$) obtained by adding the values of the TPC commands in the DCI that specifies the PUCCH resource at the transmission occasion i to the accumulated value of the previous transmission occasion $i_{last}$ (for example, $g_{b, f, c}(i_{last}, l)$) with respect to the power adjustment state

index I.

The UE may be according to at least one of Modes 1-1 to 1-4 below.

>Mode 1-1

The UE may add TPC commands (TPC command fields) in both DCI (DCI A) that schedules PDSCH A and DCI (DCI B) that schedules PDSCH B to the accumulated value in previous PUCCH of PUCCH A and PUCCH B, and apply the new accumulated value obtained to both PUCCH A and PUCCH B.

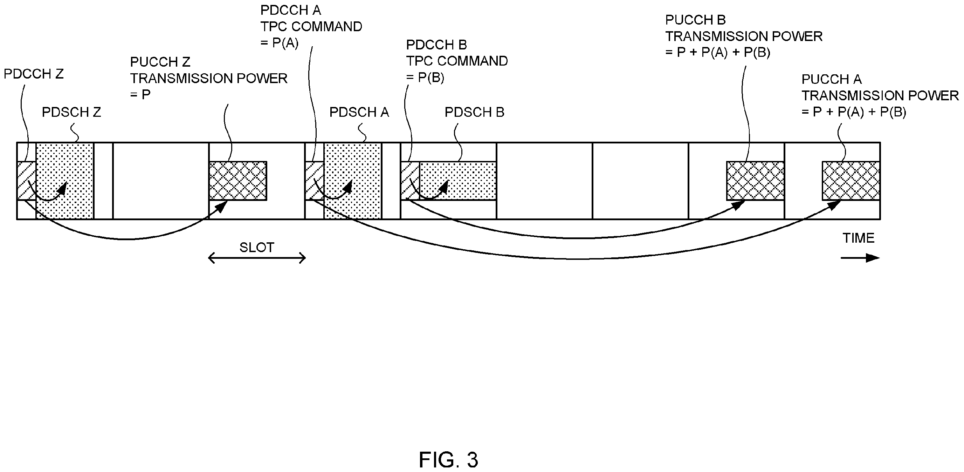

For example, as shown in Fig. 3, the UE receives a DCI (DCI Z, previous DCI, PDCCH Z, previous PDCCH) that schedules unicast PDSCH transmission (PDSCH Z, previous PDSCH) for HARQ ACK process ID Z, receives PDSCH Z, and transmits HARQ-ACK (PUCCH Z, previous PUCCH) to PDSCH Z in the resource specified by DCI Z. Here, the UE applies the accumulated value P of the TPC command to PUCCH Z.

Thereafter, the UE receives DCI A (PDCCH A) that schedules PDSCH A, PDSCH A, DCI B (PDCCH B) that schedules PDSCH B, and PDSCH B in this order. Thereafter, the UE transmits HARQ-ACK (PUCCH B) for PDSCH B, HARQ-ACK (PUCCH A) for PDSCH A in this order.

Here, the UE adds both the TPC command P(A) in DCI A and the TPC command P(B) in DCI B to the accumulated value P in the previous PUCCH (PUCCH Z) to calculate one accumulated value P + P(A) + P(B). The UE applies one accumulated value P + P(A) + P(B) to both PUCCH A and PUCCH B.

Here, if the transmission occasion of PUCCH Z is $i_{last}$ and the transmission occasion of PUCCH A and PUCCH B is i, $g_{b,f,c}(i_{last},l) = P$ may be set, and $g_{b,f,c}(i, l) = P + P(A) + P(B)$ may be set.

According to this Mode 1-1, the UE can appropriately determine the accumulated value of the TPC command even if the corresponding PUCCH orders are different for the DCI for a plurality of HARQ process IDs.

>Mode 1-2

The UE may add TPC commands (TPC command fields) in one specific DCI of DCI (DCI A) that schedules PDSCH A and DCI (DCI B) that schedules PDSCH B to the accumulated value in previous PUCCH of PUCCH A and PUCCH B, and apply the new accumulated value obtained to both PUCCH A and PUCCH B.

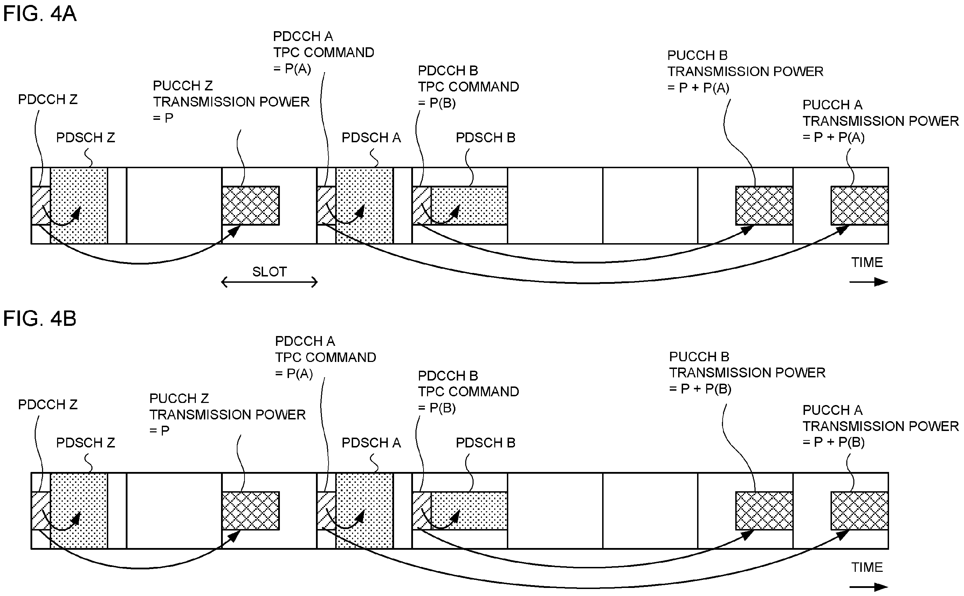

For example, as shown in Figs. 4A and 4B, the UE receives DCI Z (PDCCH Z) and PDSCH Z in this order, and then transmits PUCCH Z, as similar to Fig. 3. Thereafter, the UE receives DCI A (PDCCH A), PDSCH A, DCI B (PDCCH B), and PDSCH B in this order. Thereafter, the UE transmits HARQ-ACK (PUCCH B) for PDSCH B, HARQ-ACK (PUCCH A) for PDSCH A in this order.

The UE may determine the specific DCI according to any of Modes 1-2-1 and 1-2-2 below.

>>Mode 1-2-1

The UE may consider the DCI that triggers the last PUCCH transmission in the PUCCH group to be the specific DCI.

For example, as shown in Fig. 4A, the UE considers the DCI A that triggers PUCCH A, which is the last PUCCH of PUCCH A and PUCCH B, as the specific DCI. The UE adds the TPC command P(A) in a specific DCI (DCI A) to the accumulated value P in the previous PUCCH (PUCCH Z) of PUCCH A and PUCCH B to calculate one accumulated value P + P(A). The UE applies one accumulated value P + P(A) to both PUCCH A and PUCCH B.

Here, if the transmission occasion of PUCCH Z is $i_{last}$ and the transmission occasion of PUCCH A and PUCCH B is i, $g_{b,f,c}(i_{last},l) = P$ may be set, and $g_{b,f,c}(i, l) = P + P(A)$ may be set.

The specific DCI is not limited to the DCI that triggers the last PUCCH transmission, and may be another DCI. For example, the DCI that triggers the first PUCCH transmission in the PUCCH group may be the specific DCI, the DCI that triggers the PUCCH transmission with the longest allocation period, or the DCI that triggers the PUCCH transmission with the shortest allocation period may be the specific DCI.

>> Mode 1-2-2

The UE may consider the last DCI in the DCI group to be the specific DCI.

For example, as shown in Fig. 4B, the UE considers DCI B, which is the last DCI among DCI A and DCI B, to be the specific DCI. The UE adds the TPC command P(B) in a specific DCI (DCI B) to the accumulated value P in the previous PUCCH (PUCCH Z) of PUCCH A and PUCCH B to calculate one accumulated value P + P(B). The UE applies one accumulated value P + P(B) to both PUCCH A and PUCCH B.

The UE may determine the specific DCI on the basis of parameters such as HARQ process ID, power control adjustment state index l, and the like. The UE may consider the DCI corresponding to the minimum value of the parameter as the specific DCI, or may consider the DCI corresponding to the maximum value of the parameter as the specific DCI.

Here, if the transmission occasion of PUCCH Z is $i_{last}$ and the transmission occasion of PUCCH A and PUCCH B is i, $g_{b, f, c}(i_{last}, I) = P$ may be set, and $g_{b, f, c}(i, I) = P + P(B)$ may be set.

According to this Mode 1-2, the UE can appropriately determine the accumulated value of the TPC command even if the corresponding PUCCH orders are different for the DCI for a plurality of HARQ process IDs.

The specific DCI is not limited to the last DCI in the DCI group, and may be another DCI. For example, the first DCI in the DCI group may be the specific DCI. Alternatively, among the DCIs in the DCI group, the DCI having the maximum or minimum aggregation level may be the specific DCI.

> Mode 1-3

The UE applies the TPC command in DCI A and the TPC command in DCI B to PUCCH A and PUCCH B, respectively. In other words, the UE applies the TPC commands of the DCI A and DCI B to the corresponding PUCCH.

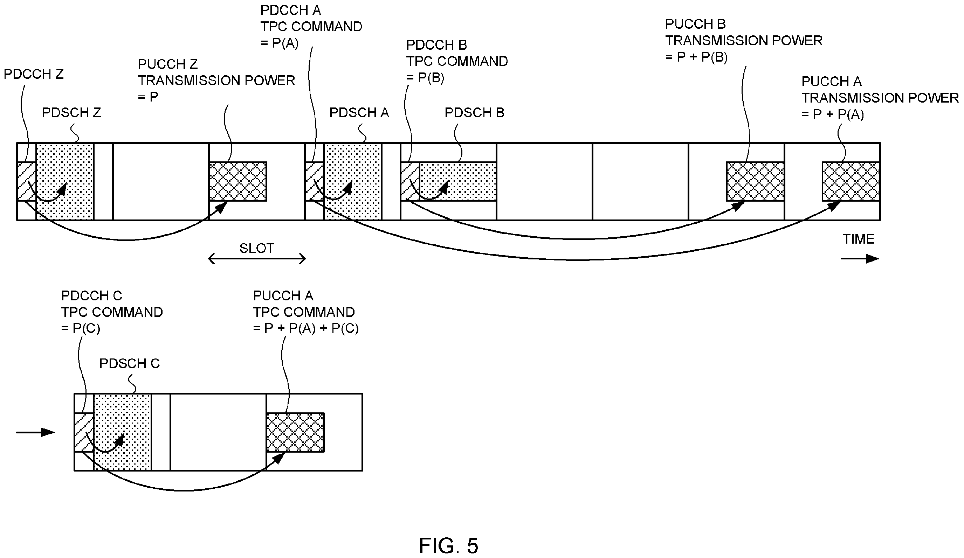

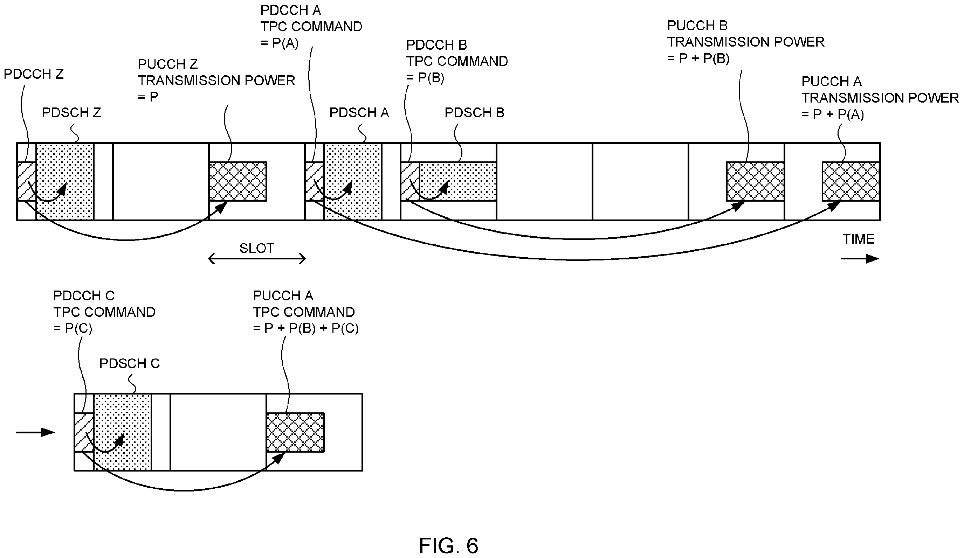

For example, as shown in Figs. 5 and 6, the UE receives DCI Z (PDCCH Z) and PDSCH Z in this order, and then transmits PUCCH Z, as similar to Fig. 3. Thereafter, the UE receives DCI A (PDCCH A), PDSCH A, DCI B (PDCCH B), and PDSCH B in this order. Thereafter, the UE transmits HARQ-ACK (PUCCH B) for PDSCH B, HARQ-ACK (PUCCH A) for PDSCH A in this order.

The UE may apply the new accumulated value $P + P(A)$ obtained by adding the TPC command $P(A)$ in DCI A to the accumulated value P in the previous PUCCH Z to PUCCH A. The UE may apply the new accumulated value $P + P(B)$ obtained by adding the TPC command $P(B)$ in DCI B to the accumulated value P in the previous PUCCH Z to PUCCH B.

Here, the UE may use the power control adjustment state index corresponding to each of A and B. For example, if the power control adjustment state index corresponding to A is IA, the power control adjustment state index corresponding to B is IB, the transmission occasion of PUCCH Z is $i_{last}$, and the transmission occasion of PUCCH A and PUCCH B is i, $g_{b, f, c}(i_{last}, IA) = g_{b, f, c}(i_{last}, IB) = P$ may be set, $g_{b, f, c}(i, IA) = P + P(A)$ may be set, and $g_{b, f, c}(i, IB) = P + P(B)$ may be set.

When the UE receives DCI C (subsequent DCI, PDCCH C, subsequent PDCCH) and PDSCH C scheduled by the DCI C (subsequent PDSCH) after transmitting PUCCH B and PUCCH A, and transmits HARQ-ACK (PUCCH C, subsequent PUCCH) for PDSCH C, the UE may accumulates the TPC commands in DCI C on the accumulated value of one specific PUCCH of PUCCH B and PUCCH A to calculate the accumulated value for PUCCH C.

For example, as shown in Figs. 5 and 6, the UE transmits PUCCH B and PUCCH A in this order, and then receives DCI C (PDCCH C) and PDSCH C in this order, and then transmits PUCCH C.

The UE may determine the specific PUCCH according to any of Modes 1-3-1 and 1-3-2 below.

>> Mode 1-3-1

The UE may consider the last PUCCH transmission in the PUCCH group as the specific PUCCH.

For example, as shown in Fig. 5, the UE considers PUCCH A, which is the last PUCCH of PUCCH B and PUCCH A, as the specific PUCCH. The UE applies a new accumulated value $P + P(A) + P(C)$ obtained by adding the TPC command in DCI C to the accumulated value $P + P(A)$ in the specific PUCCH (PUCCH A) to PUCCH C.

Here, if the power control adjustment state index corresponding to A is IA, the transmission occasion of PUCCH A is $i_{last}$, and the transmission occasion of PUCCH C is i, $g_{b, f, c}(i_{last}, IA) = P + P(A)$ may be set, or $g_{b, f, c}(i, IA) = P + P(A) + P(C)$ may be set.

The specific PUCCH is not limited to the last PUCCH transmission in the PUCCH group, and may be another PUCCH transmission. For example, the first PUCCH transmission in the PUCCH group may be the specific PUCCH, the PUCCH transmission with the longest allocation period, or the PUCCH transmission with the shortest allocation period may be the specific PUCCH.

>> Mode 1-3-2

The UE may consider the PUCCH transmission triggered by the last DCI in the DCI group to be the specific PUCCH.

For example, as shown in Fig. 6, the UE considers PUCCH B triggered by DCI B, which is the last DCI of DCI A and DCI B, as the specific PUCCH. The UE applies a new accumulated value $P + P(B) + P(C)$ obtained by adding the TPC command in DCI C to the accumulated value $P + P(B)$ in the specific PUCCH (PUCCH B) to PUCCH C.

Here, if the power control adjustment state index corresponding to B is IB, the transmission occasion of PUCCH B is $i_{last}$, and the transmission occasion of PUCCH C is i, $g_{b, f, c}(i_{last}, IB) = P + P(B)$ may be set, or $g_{b, f, c}(i, IB) = P + P(B) + P(C)$ may be set.

According to this Mode 1-3, the UE can appropriately determine the accumulated value of the TPC command even if the corresponding PUCCH orders are different for the DCI for a plurality of HARQ process IDs.

The specific PUCCH is not limited to the PUCCH transmission triggered by the last DCI in the DCI group, and may be PUCCH transmission triggered by another DCI. For example, the PUCCH transmission triggered by the first DCI in the DCI group may be the specific PUCCH. Alternatively, among the DCIs in the DCI group, the PUCCH transmission triggered by the DCI having the maximum or minimum aggregation level may be the specific PUCCH.

> Mode 1-4

When a plurality of PUCCHs correspond to a plurality of services (communication requirements), the UE may determine (calculate, store, manage) a accumulated value for each service. The UE may determine the accumulated value for different services in different ways.

Different services may be eMBB, URLLC, mMTC, or the like. It may be assumed that, in the UE, functions corresponding to different services are distinguished at the physical layer. In different services, the RNTI that scrambles the CRC of the DCI for scheduling may be different, or the MCS table may be different.

For example, data for eMBB (PDSCH or PUSCH) may be scheduled by DCI with CRC scrambled using C-RNTI. The data for URLLC may be scheduled by DCI having CRC scrambled using a specific RNTI (Configured Scheduling (CS) -RNTI, new-RNTI, URLLC-RNTI, Y-RNTI, or the like) different from C-RNTI. CS-RNTI is used, for example, in DCI to give an instruction on activation, deactivation, and retransmission of configured grant transmission configured by higher layer signaling.

For example, the data for URLLC may be scheduled using a new 64QAM MCS table (MCS table for URLLC). The data for eMBB may be scheduled using another MCS table (MCS table for eMBB).

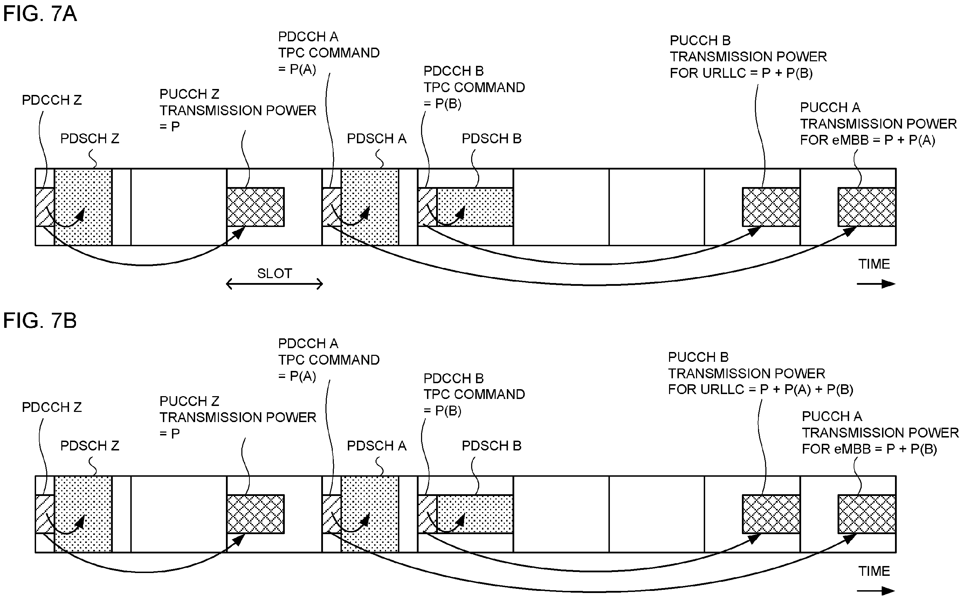

URLLC requires faster feedback than eMBB. Therefore, as shown in Figs. 7A and 7B, a case may occur in which, even when the PDSCH B for URLLC is later in time than the PDSCH A for eMBB, the UE transmits HARQ-ACK (PUCCH B) for URLLC before the HARQ-ACK (PUCCH A) for eMBB.

DCI Z (PDCCH Z), PDSCH Z, and PUCCH Z may be for eMBB or URLLC.

The UE may determine the accumulated value according to any of Modes 1-4-1 and 1-4-2 below.

>> Mode 1-4-1

The UE may separately determine (calculate, store, manage) accumulated values for a plurality of PUCCHs corresponding to different services (communication requirements).

For example, as shown in Fig. 7A, the UE may apply a new accumulated value (accumulated value for eMBB) P + P(A) obtained by adding the TPC command P(A) in DCI A for eMBB to the accumulated value P in previous PUCCH (PUCCH Z) of PUCCH A and PUCCH B, to PUCCH A for eMBB. The UE may apply a new accumulated value (accumulated value for URLLC) P + P(B) obtained by adding the TPC command P(B) in DCI B for URLLC to the accumulated value P in previous PUCCH (PUCCH Z) of PUCCH A and PUCCH B, to PUCCH B for URLLC.

Here, the UE may use the power control adjustment state index corresponding to each of A (for eMBB) and B (for URLLC). For example, if the power control adjustment state index corresponding to A is lA, the power control adjustment state index corresponding to B is lB, the transmission occasion of PUCCH Z is $i_{last}$, and the transmission occasion of PUCCH A and PUCCH B is i, $g_{b, f, c}(i_{last}, lA) = g_{b, f, c}(i_{last}, lB) = P$ may be set, $g_{b, f, c}(i, lA) = P + P(A)$ may be set, and $g_{b, f, c}(i, lB) = P + P(B)$ may be set.

>> Mode 1-4-2

The UE may apply the accumulated value of the TPC command for the first service and the second service to the PUCCH for the first service, and apply the accumulated value of the TPC command for the second service to the PUCCH for the second service.

For example, the first service may be URLLC and the second service may be eMBB. The first service and the second service are not limited to these.

For example, as shown in Fig. 7B, the UE may apply a new accumulated value (accumulated value for eMBB) P + P(A) obtained by adding the TPC command P(A) in DCI A for eMBB to the accumulated value P in previous PUCCH (PUCCH Z) of PUCCH A and PUCCH B, to PUCCH A for eMBB. The UE may apply a new accumulated value (accumulated value for URLLC) P + P(A) + P(B) obtained by adding both the TPC command P(A) in DCI A for eMBB and the TPC command P(B) in DCI B for URLLC to the accumulated value P in previous PUCCH (PUCCH Z) of PUCCH A and PUCCH B, to PUCCH B for URLLC.

Here, the UE may use the power control adjustment state index corresponding to each of A (for eMBB) and B (for URLLC). For example, if the power control adjustment state index corresponding to A is 1A, the power control adjustment state index corresponding to B is 1B, the transmission occasion of PUCCH Z is $i_{last}$, and the transmission occasion of PUCCH A and PUCCH B is i, $g_{b, f, c}(i_{last}, IA) = g_{b, f, c}(i_{last}, IB) = P$ may be set, $g_{b, f, c}(i, IA) = P + P(A)$ may be set, and $g_{b, f, c}(i, IB) = P + P(A) + P(B)$ may be set.

According to this Mode 1-4, the UE can appropriately determine the accumulated value of the TPC command even if the corresponding PUCCH orders are different for the DCI for a plurality of services.

(Mode 2)

In mode 2, for two HARQ process IDs A and B in a given cell, when DCI (DCI A), which schedules unicast PUSCH transmission (PUSCH A) for A, is earlier in time than DCI (DCI B), which schedules unicast PUSCH transmission (PUSCH B) for B, the UE may be scheduled so that PUSCH B is earlier than PUSCH A.

The UE may be an advanced UE (a UE having a specific capability, a UE that transmits capability information indicating that the UE has a specific capability).

DCI A may have a CRC scrambled with C-RNTI. DCI B may have a CRC scrambled with C-RNTI.

DCI A and DCI B may be referred to as a DCI group, and PUSCH B and PUSCH A may be referred to as a PUSCH group. This mode may be applied when the order of the PUSCH group is different from the order of the corresponding DCI group. This mode may be applied when the order of three or more PUSCHs is different from the order of the corresponding three or more DCIs.

At the transmission occasion i of the PUSCH, the UE may control the PUSCH transmission power at the transmission occasion i on the basis of the accumulated value (for example, $f_{b, f, c}(i,l)$) obtained by adding the values of the TPC commands in the DCI that schedules the PUSCH at the transmission occasion i to the accumulated value of the previous transmission occasion $i_{last}$ (for example, $f_{b, f, c}(i_{last}, l)$) with respect to the power adjustment state index 1.

The UE may be according to at least one of Modes 2-1 to 2-4 below.

> Mode 2-1

The UE may add TPC commands (TPC command fields) in both DCI (DCI A) that schedules PUSCH A and DCI (DCI B) that schedules PUSCH B to the previous accumulated value in previous PUSCH of PUSCH A and PUSCH B, and apply the new accumulated value obtained to both PUSCH A and PUSCH B.

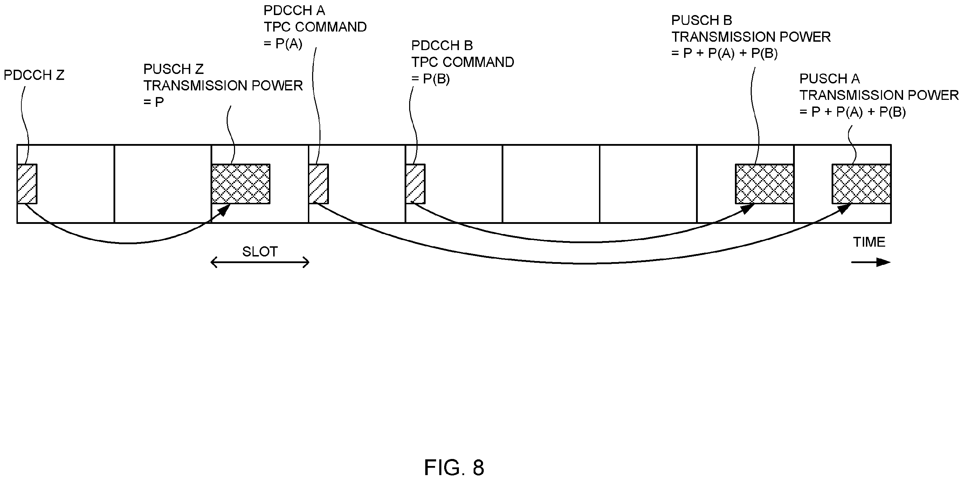

For example, as shown in Fig. 8, the UE receives a DCI (DCI Z, previous DCI, PDCCH Z, previous PDCCH) that schedules unicast PUSCH transmission (PUSCH Z, previous PUSCH) for HARQ ACK process ID Z, and transmits PUSCH Z in the resource specified by DCI Z. Here, the UE applies the accumulated value P of the TPC command to PUSCH Z.

Thereafter, the UE receives DCI A (PDCCH A) that schedules PUSCH A and DCI B (PDCCH B) that schedules PUSCH B in this order. Thereafter, the UE transmits PUSCH B and PUSCH A in this order.

Here, the UE adds both the TPC command P(A) in DCI A and the TPC command P(B) in DCI B to the accumulated value P in the previous PUSCH (PUSCH Z) to calculate one accumulated value P + P(A) + P(B). The UE applies one accumulated value P + P(A) + P(B) to both PUSCH A and PUSCH B.

Here, if the transmission occasion of PUSCH Z is $i_{last}$ and the transmission occasion of PUSCH A and PUSCH B is i, $f_{b,f,c}(i_{last},l) = P$ may be set, and $f_{b,f,c}(i, l) = P + P(A) + P(B)$ may be set.

According to this Mode 2-1, the UE can appropriately determine the accumulated value of the TPC command even if the corresponding PUSCH orders are different for the DCI for a plurality of HARQ process IDs.

> Mode 2-2

The UE may add TPC commands (TPC command fields) in one specific DCI of DCI (DCI A) that schedules PUSCH A and DCI (DCI B) that schedules PUSCH B to the accumulated value in previous PUSCH of PUSCH A and PUSCH B, and apply the new accumulated value obtained to both PUSCH A and PUSCH B.

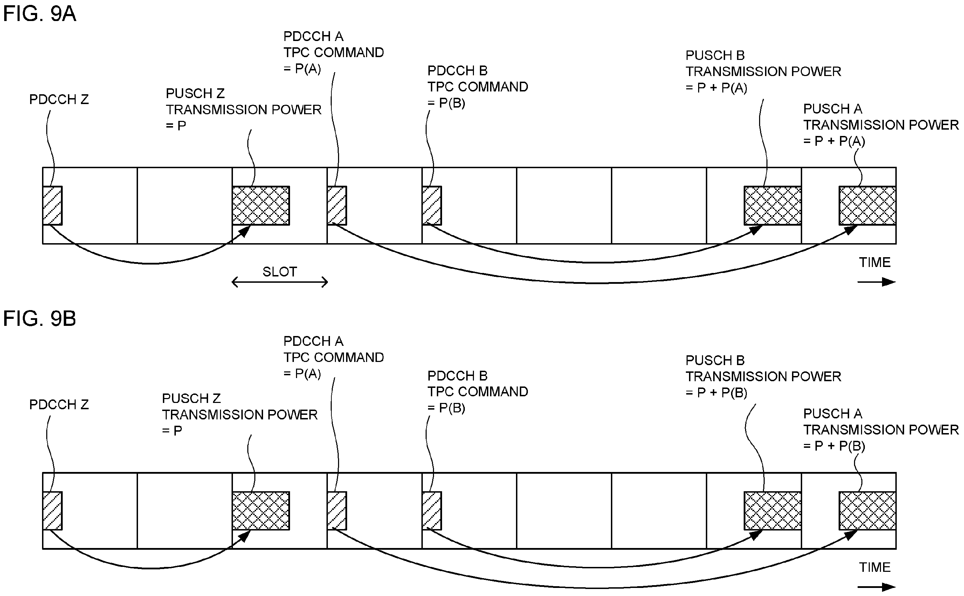

For example, as shown in Figs. 9A and 9B, the UE receives DCI Z (PDCCH Z), and then transmits PUSCH Z, as similar to Fig. 8. Thereafter, the UE receives DCI A (PDCCH A), and DCI B (PDCCH B), in this order. Thereafter, the UE transmits PUSCH B and PUSCH A in this order.

The UE may determine the specific DCI according to any of Modes 2-2-1 and 2-2-2 below.

>> Mode 2-2-1

The UE may consider the DCI that triggers the last PUSCH transmission in the PUSCH group to be a specific DCI.

For example, as shown in Fig. 9A, the UE considers the DCI A that triggers PUSCH A, which is the last PUSCH of PUSCH A and PUSCH B, as a specific DCI. The UE adds the TPC command P(A) in a specific DCI (DCI A) to the accumulated value P in the previous PUSCH (PUSCH Z) of PUSCH A and PUSCH B to calculate one accumulated value P + P(A). The UE applies one accumulated value P + P(A) to both PUSCH A and PUSCH B.

Here, if the transmission occasion of PUSCH Z is $i_{last}$ and the transmission occasion of PUSCH A and PUSCH B is i, $f_{b, f, c}(i_{last}, l) = P$ may be set, and $f_{b, f, c}(i, l) = P + P(A)$ may be set.

The specific DCI is not limited to the DCI that triggers the last PUSCH transmission, and may be another DCI. For example, the DCI that triggers the first PUSCH transmission in the PUSCH group may be the specific DCI, the DCI that triggers the PUSCH transmission with the longest allocation period, or the DCI that triggers the PUSCH transmission with the shortest allocation period may be the specific DCI.

>> Mode 2-2-2

The UE may consider the last DCI in the DCI group to be the specific DCI.

For example, as shown in Fig. 9B, the UE considers DCI B, which is the last DCI among DCI A and DCI B, to be the specific DCI. The UE adds the TPC command P(B) in a specific DCI (DCI B) to the accumulated value P in the previous PUSCH (PUSCH Z) of PUSCH A and PUSCH B to calculate one accumulated value P + P(B). The UE applies one accumulated value P + P(B) to both PUSCH A and PUSCH B.

The UE may determine the specific DCI on the basis of parameters such as HARQ process ID, power control adjustment state index l, and the like. The UE may consider the DCI corresponding to the minimum value of the parameter as the specific DCI, or may consider the DCI corresponding to the maximum value of the parameter as the specific DCI.

Here, if the transmission occasion of PUSCH Z is $i_{last}$ and the transmission occasion of PUSCH A and PUSCH B is i, $f_{b, f, c}(i_{last}, l) = P$ may be set, and $f_{b, f, c}(i, l) = P + P(B)$ may be set.

According to this Mode 2-2, the UE can appropriately determine the accumulated value of the TPC command even if the corresponding PUSCH orders are different for the DCI for a plurality of HARQ process IDs.

The specific DCI is not limited to the last DCI in the DCI group, and may be another DCI. For example, the first DCI in the DCI group may be the specific DCI. Alternatively, among the DCIs in the DCI group, the DCI having the maximum or minimum aggregation level may be the specific DCI.

> Mode 2-3

The UE applies the TPC command in DCI A and the TPC command in DCI B to PUSCH A and PUSCH B, respectively. In other words, the UE applies the TPC commands of the DCI A and DCI B to the corresponding PUSCH.

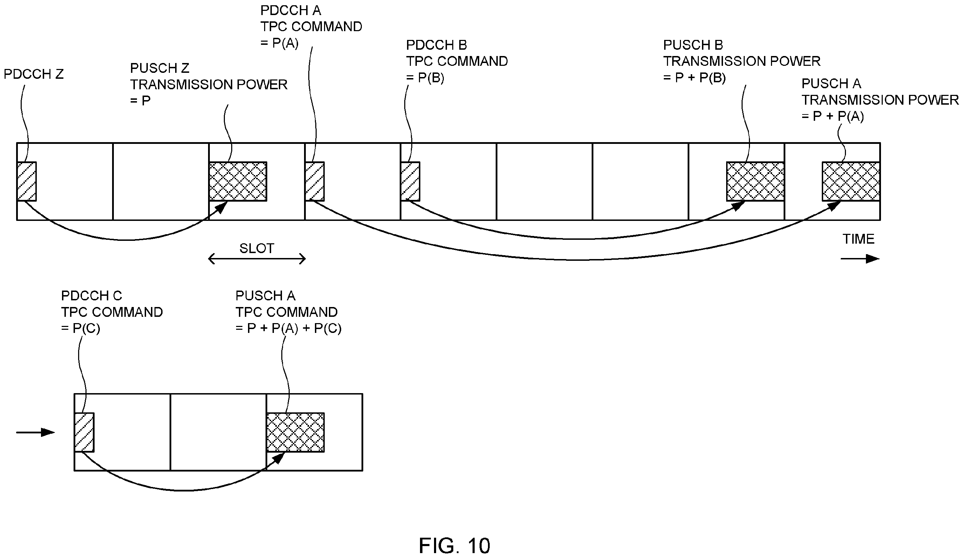

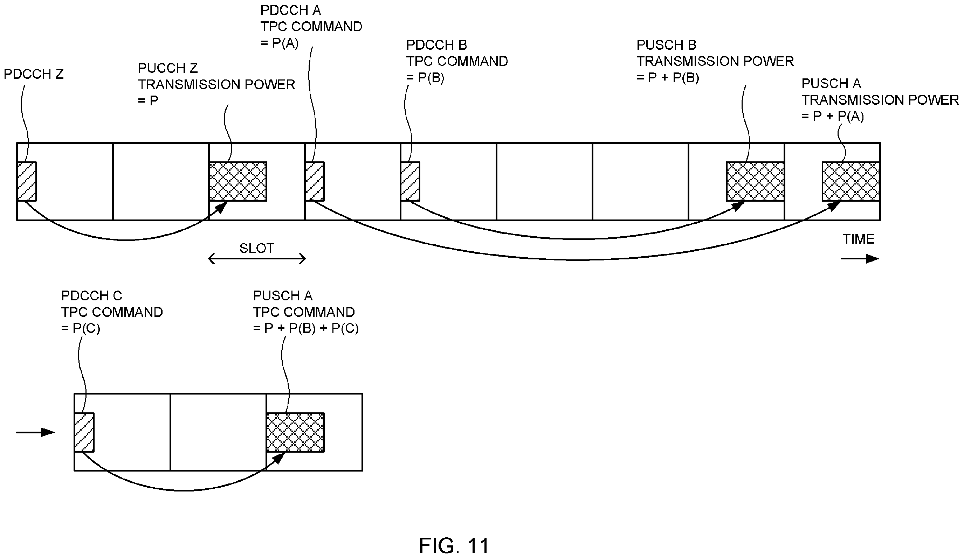

For example, as shown in Figs. 10 and 11, the UE receives DCI Z (PDCCH Z), and then transmits PUSCH Z, as similar to Fig. 8. Thereafter, the UE receives DCI A (PDCCH A), and DCI B (PDCCH B), in this order. Thereafter, the UE transmits PUSCH B and PUSCH A in this order.

The UE may apply the new accumulated value P + P(A) obtained by adding the TPC command P(A) in DCI A to the accumulated value P in the previous PUSCH Z to PUSCH A. The UE may apply the new accumulated value P + P(B) obtained by adding the TPC command P(B) in DCI B to the accumulated value P in the previous PUSCH Z to PUSCH B.

Here, the UE may use the power control adjustment state index corresponding to each of A and B. For example, if the power control adjustment state index corresponding to A is lA, the power control adjustment state index corresponding to B is lB, the transmission occasion of PUSCH Z is $i_{last}$, and the transmission occasion of PUSCH A and PUSCH B is i, $f_{b, f, c}(i_{last}, lA) = f_{b, f, c}(i_{last}, lB) = P$ may be set, $f_{b, f, c}(i, lA) = P + P(A)$ may be set, and $f_{b, f, c}(i, lB) = P + P(B)$ may be set.

When the UE transmits DCI C (subsequent DCI, PDCCH C, subsequent PDCCH) and PUSCH (PUSCH C, subsequent PUSCH) scheduled by the DCI C after transmitting PUSCH B and PUSCH A, the UE may accumulate the TPC commands in DCI C on the accumulated value of one specific PUSCH of PUSCH B and PUSCH A to calculate the accumulated value for PUSCH C.

For example, as shown in Figs. 10 and 11, the UE transmits PUSCH B and PUSCH A in this order, and then receives DCI C (PDCCH C), and then transmits PUSCH C.

The UE may determine the specific PUSCH according to any of Modes 2-3-1 and 2-3-2 below.

>> Mode 2-3-1

The UE may consider the last PUSCH transmission in the PUSCH group as the specific PUSCH.

For example, as shown in Fig. 10, the UE considers PUSCH A, which is the last PUSCH of PUSCH B and PUSCH A, as the specific PUSCH. The UE applies a new accumulated value P + P(A) + P(C) obtained by adding the TPC command in DCI C to the accumulated value P + P(A) in the specific PUSCH (PUSCH A) to PUSCH C.

Here, if the power control adjustment state index corresponding to A is lA, the transmission occasion of PUSCH

A is $i_{last}$, and the transmission occasion of PUSCH C is i, $f_{b, f, c}(i_{last}, IA) = P + P(A)$ may be set, and $f_{b, f, c}(i, IA) = P + P(A) + P(C)$ may be set.

The specific PUSCH is not limited to the last PUSCH transmission in the PUSCH group, and may be another PUSCH transmission. For example, the first PUSCH transmission in the PUSCH group may be the specific PUSCH, the PUSCH transmission with the longest allocation period, or the PUSCH transmission with the shortest allocation period may be the specific PUSCH.

>> Mode 2-3-2

The UE may consider the PUSCH transmission triggered by the last DCI in the DCI group to be the specific PUSCH.

For example, as shown in Fig. 11, the UE considers PUSCH B triggered by DCI B, which is the last DCI of DCI A and DCI B, as the specific PUSCH. The UE applies a new accumulated value P + P(B) + P(C) obtained by adding the TPC command in DCI C to the accumulated value P + P(B) in the specific PUSCH (PUSCH B) to PUSCH C.

Here, if the power control adjustment state index corresponding to B is IB, the transmission occasion of PUSCH B is $i_{last}$, and the transmission occasion of PUSCH C is i, $f_{b,f,c}(i_{last}, IB) = P + P(B)$ may be set, and $f_{b, f, c}(i, IB) = P + P(B) + P(C)$ may be set.

According to this Mode 2-3, the UE can appropriately determine the accumulated value of the TPC command even if the corresponding PUSCH orders are different for the DCI for a plurality of HARQ process IDs.

The specific PUSCH is not limited to the PUSCH transmission triggered by the last DCI in the DCI group, and may be PUSCH transmission triggered by another DCI. For example, the PUSCH transmission triggered by the first DCI in the DCI group may be the specific PUSCH. Alternatively, among the DCIs in the DCI group, the PUSCH transmission triggered by the DCI having the maximum or minimum aggregation level may be the specific PUSCH.

> Mode 2-4

When a plurality of PUSCHs correspond to a plurality of services (communication requirements), the UE may determine (calculate, store, manage) a accumulated value for each service. The UE may determine the accumulated value for different services in different ways.

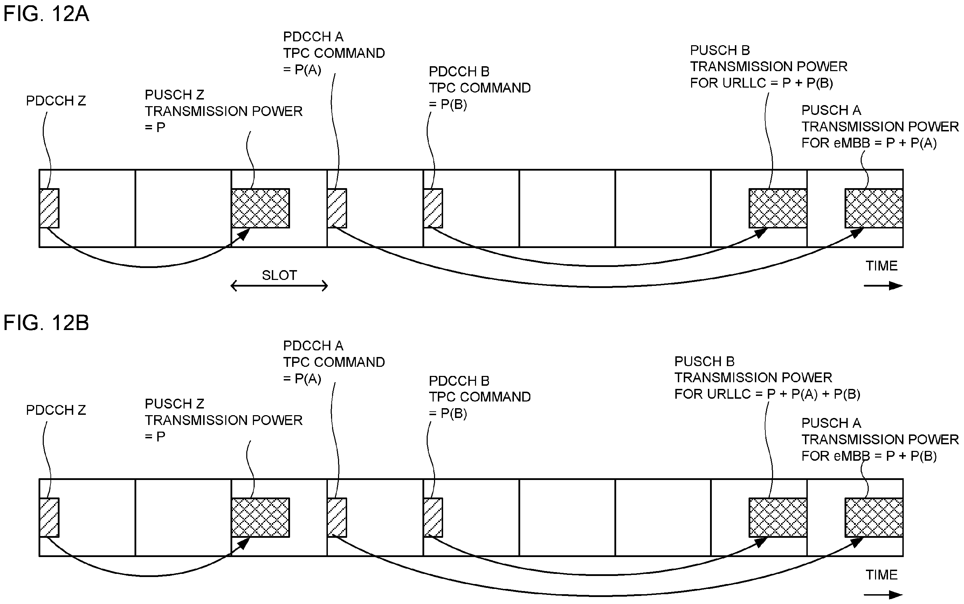

URLLC requires faster feedback than eMBB. Therefore, as shown in Figs. 12A and 12B, a case may occur in which, even when the DCI (DCI B) for URLLC is later in time than the DCI (DCI A) for eMBB, the UE transmits PUSCH (PUSCH B) for URLLC before the PUSCH (PUSCH A) for eMBB.

DCI Z (PDCCH Z) and PUSCH Z may be for eMBB or URLLC.

The UE may determine the accumulated value according to any of Modes 2-4-1 and 2-4-2 below.

>> Mode 2-4-1

The UE may separately determine (calculate, store, manage) accumulated values for a plurality of PUSCHs corresponding to different services (communication requirements). The UE may calculate the accumulated value of the corresponding PUSCH on the basis of the TPC command in the DCI corresponding to each service.

For example, as shown in Fig. 12A, the UE may apply a new accumulated value (accumulated value for eMBB) P + P(A) obtained by adding the TPC command P(A) in DCI A for eMBB to the accumulated value P in previous PUSCH (PUSCH Z) of PUSCH A and PUSCH B, to PUSCH A for eMBB. The UE may apply a new accumulated value (accumulated value for URLLC) P + P(B) obtained by adding the TPC command P(B) in DCI B for URLLC to the accumulated value P in previous PUSCH (PUSCH Z) of PUSCH A and PUSCH B, to PUSCH B for URLLC.

Here, the UE may use the power control adjustment state index corresponding to each of A (for eMBB) and B (for URLLC). For example, if the power control adjustment state index corresponding to A is 1A, the power control adjustment state index corresponding to B is 1B, the transmission occasion of PUSCH Z is $i_{last}$, and the transmission occasion of PUSCH A and PUSCH B is i, $f_{b, f, c}(i_{last}, 1A) = f_{b, f, c}(i_{last}, 1B) = P$ may be set, $f_{b, f, c}(i, 1A) = P + P(A)$ may be set, and $f_{b, f, c}(i, 1B) = P + P(B)$ may be set.

>> Mode 2-4-2

The UE may apply the accumulated value of the TPC command for the first service and the second service to the PUSCH for the first service, and apply the accumulated value of the TPC command for the second service to the PUSCH for the second service.

For example, the first service may be URLLC and the second service may be eMBB. The first service and the second service are not limited to these.

For example, as shown in Fig. 12B, the UE may apply a new accumulated value (accumulated value for eMBB) P + P(A) obtained by adding the TPC command P(A) in DCI A for eMBB to the accumulated value P in previous PUSCH (PUSCH Z) of PUSCH A and PUSCH B, to PUSCH A for eMBB. The UE may apply a new accumulated value (accumulated value for URLLC) P + P(A) + P(B) obtained by adding both the TPC command P(A) in DCI A for eMBB and the TPC command P(B) in DCI B for URLLC to the accumulated value P in previous PUSCH (PUSCH Z) of PUSCH A and PUSCH B, to PUSCH B for URLLC.

Here, the UE may use the power control adjustment state index corresponding to each of A (for eMBB) and B (for URLLC). For example, if the power control adjustment state index corresponding to A is 1A, the power control adjustment state index corresponding to B is 1B, the transmission occasion of PUSCH Z is $i_{last}$, and the transmission occasion of PUSCH A and PUSCH B is i, $f_{b, f, c}(i_{last}, 1A) = f_{b, f, c}(i_{last}, 1B) = P$ may be set, $f_{b, f, c}(i, 1A) = P + P(A)$ may be set, and $f_{b, f, c}(i, 1B) = P + P(A) + P(B)$ may be set.

According to this Mode 2-4, the UE can appropriately determine the accumulated value of the TPC command even if the corresponding PUSCH orders are different for the DCI for a plurality of services.

(Radio Communication System)

Now, the structure of a radio communication system according to the present embodiment will be described below. In this radio communication system, communication is performed using one or a combination of the radio communication methods according to the embodiments of the present disclosure.

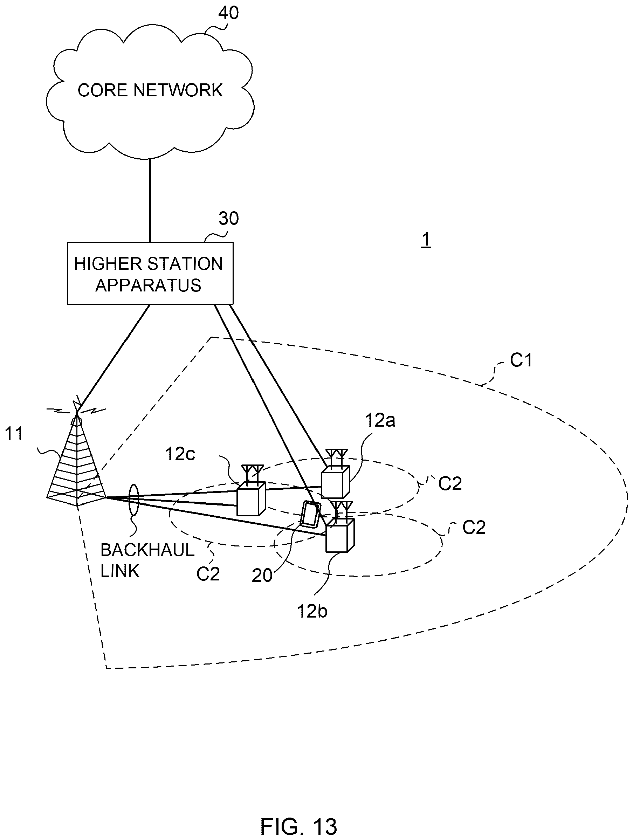

Fig. 13 is a diagram showing an example of a schematic configuration of a radio communication system according to the present embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "LTE (Long Term Evolution)", "LTE-A (LTE-Advanced)", "LTE-B (LTE-Beyond)", "SUPER 3G", "IMT-Advanced", "4G (4th generation mobile communication system)", "5G (5th generation mobile communication system)", "NR (New Radio)", "FRA (Future Radio Access)", "New-RAT (Radio Access Technology)", and the like, or may be seen as a system to implement these.

The radio communication system 1 includes a radio base station 11 that forms a macro cell C1 covering a relatively wide coverage, and radio base stations 12 (12a to 12c) that are placed within the macro cell C1 and that form small cells C2, which are narrower than the macro cell C1. Also, user terminals 20 are placed in the macro cell C1 and in each small cell C2. The arrangement, number, and the like of cells and user terminals 20 are not limited to an aspect shown in the drawings.

The user terminals 20 can connect with both the radio base station 11 and the radio base stations 12. It is assumed that the user terminals 20 use the macro cell C1 and the small cells C2 at the same time using CA or DC. Furthermore, the user terminals 20 may apply CA or DC using a plurality of cells (CCs).

Between the user terminals 20 and the radio base station 11, communication can be carried out using a carrier of a relatively low frequency band (for example, 2 GHz) and a narrow bandwidth (referred to as an "existing carrier", a "legacy carrier", and the like). Meanwhile, between the user terminals 20 and the radio base stations 12, a carrier of a relatively high frequency band (for example, 3.5 GHz, 5 GHz, and the like) and a wide bandwidth may be used, or the same carrier as that used in the radio base station 11 may be used. Note that the structure of the frequency band for use in each radio base station is by no means limited to these.

Moreover, the user terminal 20 can perform communication in each cell using time division duplex (TDD) and/or frequency division duplex (FDD). Further, in each cell (carrier), a single numerology may be applied, or a plurality of different numerologies may be applied.

The numerology can be a communication parameter applied to at least one of transmission and reception of a certain signal or channel. The numerology can indicate, in one example, at least one of subcarrier spacing, bandwidth, symbol length, cyclic prefix length, subframe length, TTI duration, the number of symbols per TTI, the radio frame configuration, particular filtering processing performed by the transceiver in frequency domains, particular windowing processing performed by a transceiver in time domains, and the like. For example, for a certain physical channel, when the subcarrier spacing differs and/or the numbers of OFDM symbols are different between the constituent OFDM symbols, this case may be described that they are different in numerology.

The radio base station 11 and the radio base stations 12 may be (or two radio base stations 12 may be) connected to each other by wired connection (for example, optical fiber, X2 interface, and the like in compliance with the Common Public Radio Interface (CPRI)) or wireless connection.

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME),and the like, but is by no means limited to these. Also, each radio base station 12 may be connected with the higher station apparatus 30 via the radio base station 11.

Note that the radio base station 11 is a radio base station having a relatively wide coverage, and may be referred to as a "macro base station", an "aggregate node", an "eNB (eNodeB)", a "transmitting/receiving point", and the like. Also, the radio base stations 12 are radio base stations having local coverages, and may be referred to as "small base stations", "micro base stations", "pico base stations", "femto base stations", "HeNBs (Home eNodeBs)", "RRHs (Remote Radio Heads)", "transmitting/receiving points", and the like. Hereinafter the radio base stations 11 and 12 will be collectively referred to as "radio base stations 10", unless specified otherwise.

The user terminals 20 are terminals to support various communication schemes such as LTE, LTE-A, and the like, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication method of reducing an interference between terminals by dividing, for each of terminals, a system bandwidth into bands composed of one or continuous resource blocks, and causing a plurality of terminals to use mutually different bands. Note that the uplink and downlink radio access schemes are not limited to the combinations of these, and other radio access schemes can be used as well.

In the radio communication system 1, a downlink shared channel (PDSCH (Physical Downlink Shared CHannel)), which is used by each user terminal 20 on a shared basis, a broadcast channel (PBCH (Physical Broadcast CHannel)), downlink L1/L2 control channels, and the like are used as downlink channels. User data, higher layer control information, SIBs (System Information Blocks), and the like are communicated in the PDSCH. Further, MIB (Master Information Block) is transmitted by PBCH.

The downlink L1/L2 control channels include a PDCCH (Physical Downlink Control Channel), an EPDCCH (Enhanced Physical Downlink Control Channel), a PCFICH (Physical Control Format Indicator Channel), a PHICH (Physical Hybrid-ARQ Indicator Channel), and the like. Downlink control information (DCI) including scheduling information of PDSCH and/or PUSCH, or the like is transmitted by PDCCH.

Note that DCI that schedules receipt of DL data may also be referred to as "DL assignment", and DCI that schedules transmission of UL data may also be referred to as "UL grant".

The use of PCFICH can cause the number of OFDM symbols used for the PDCCH to be transmitted. The PHICH can cause hybrid automatic repeat request (HARQ) delivery acknowledgement information (e.g., such as retransmission control information, HARQ-ACK, and ACK/NACK) for the PUSCH to be transmitted. The EPDCCH is frequency-division-multiplexed with the PDSCH (downlink shared data channel) and used to communicate DCI and the like, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)), and the like are used as uplink channels. User data, higher layer control information, and the like are communicated by the PUSCH. Also, in the PUCCH, downlink radio quality information (CQI (Channel Quality Indicator)), delivery acknowledgement information, scheduling requests (SRs), and the like are communicated. By means of PRACH, random access preambles for establishing connections with cells are transmitted.

In the radio communication systems 1, cell-specific reference signal (CRSs), channel state information reference signal (CSI-RSs), demodulation reference signal (DMRSs), positioning reference signal (PRSs), and the like are communicated as downlink reference signals. Also, in the radio communication system 1, measurement reference signals (SRSs (Sounding Reference Signals)), demodulation reference signals (DMRSs), and the like are communicated as uplink reference signals. Note that, DMRSs may be referred to as "user terminal-specific reference signals (UE-specific Reference Signals)". Also, the reference signals to be communicated are by no means limited to these.

<Radio Base Station>

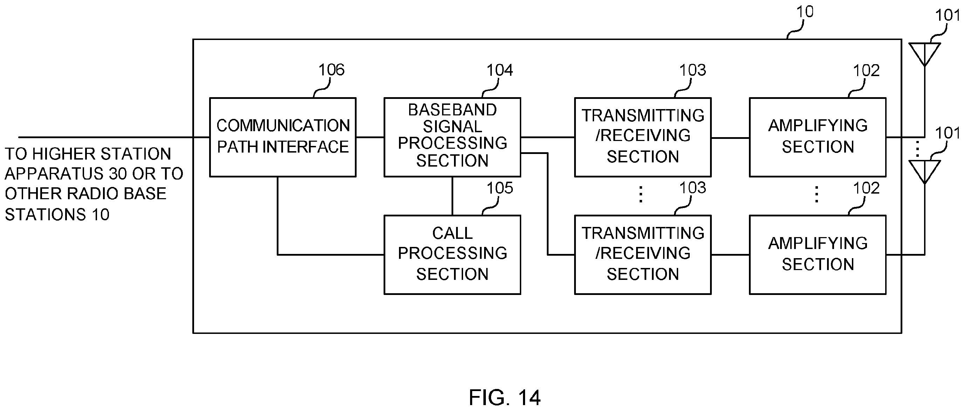

Fig. 14 is a diagram showing an example of an overall structure of the radio base station according to the present embodiment. A radio base station 10 has a plurality of transmitting/receiving antennas 101, amplifying sections 102, transmitting/receiving sections 103, a baseband signal processing section 104, a call processing section 105, and a communication path interface 106. Note that one or more transmitting/receiving antennas 101, amplifying sections 102, and transmitting/receiving sections 103 may be provided.

User data to be transmitted from the radio base station 10 to the user terminal 20 by the downlink is input from the higher station apparatus 30 to the baseband signal processing section 104 via the communication path interface 106.

In the baseband signal processing section 104, the user data is subjected to transmission processes, including a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and an inverse fast Fourier transform, and forwarded to the transmitting/receiving sections 103.

Each of the transmitting/receiving sections 103 converts a baseband signal, which is pre-coded for each antenna and output from the baseband signal processing section 104, into a signal in a radio frequency band, and transmits such a radio frequency signal. A radio frequency signal subjected to the frequency conversion in each transmitting/receiving section 103 is amplified in the amplifying section 102, and transmitted from each transmitting/receiving antenna 101. The transmitting/receiving section 103 can be constituted by a transmitters/receiver, a transmitting/receiving circuit or transmitting/receiving apparatus that can be described based on general understanding of the technical field to which the present disclosure pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing) of communication channels, manages the state of the radio base stations 10 and manages the radio resources.

The communication path interface 106 transmits and receives signals to and from the higher station apparatus 30 via a predetermined interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

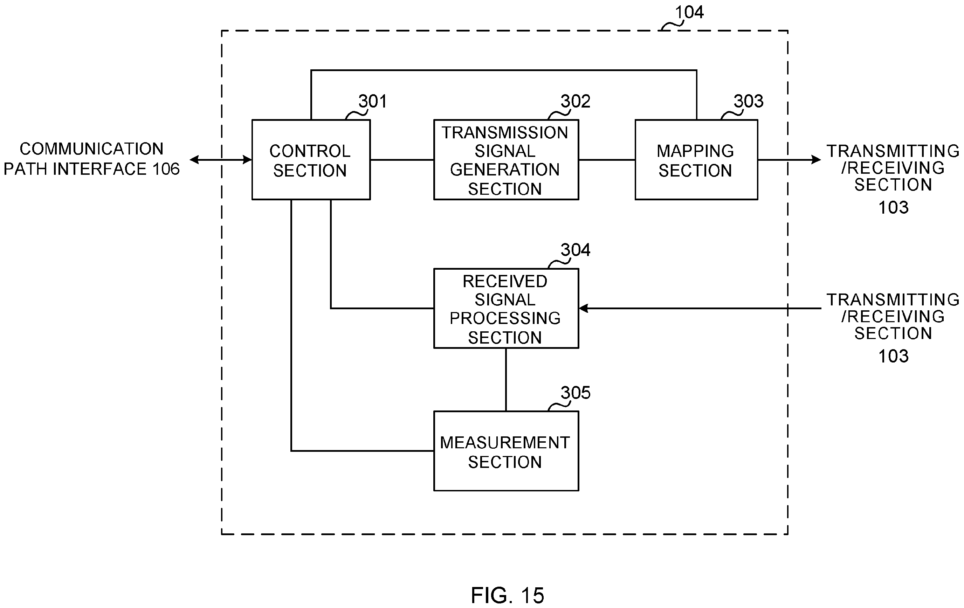

Fig. 15 is a diagram showing an example of a functional configuration of the radio base station according to the present embodiment. Note that, although this example will primarily show functional blocks that pertain to characteristic parts of the present embodiment, it may be assumed that the radio base station 10 has other functional blocks that are necessary for radio communication as well.

The baseband signal processing section 104 at least has a control section (scheduler) 301, a transmission signal generation section 302, a mapping section 303, a received signal processing section 304, and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which the present disclosure pertains.

For example, the control section 301 controls the generation of signals in the transmission signal generation section 302, the allocation of signals in the mapping section 303, and the like. Furthermore, the control section 301 controls the signal receiving processing in the received signal processing section 304, the measurements of signals in the measurement section 305, and the like.

The control section 301 controls the scheduling (for example, resource allocation) of system information, downlink data signals (for example, signals transmitted in the PDSCH), and downlink control signals (for example, signals that are transmitted in the PDCCH and/or the EPDCCH, and delivery acknowledgement information). The control section 301 controls the generation of downlink control signals, downlink data signals and the like, based on the results of deciding whether or not retransmission control is necessary for uplink data signals, and the like.

The control section 301 controls the scheduling of synchronization signals (for example, the PSS (Primary Synchronization Signal)/SSS (Secondary Synchronization Signal)), downlink reference signals (for example, the CRS, the CSI-RS, the DMRS, etc.), and the like.

The control section 301 controls the scheduling for uplink data signals (for example, signals transmitted in the PUSCH), uplink control signals (for example, signals that are transmitted in the PUCCH and/or the PUSCH, and delivery acknowledgement information), random access preambles (for example, signals transmitted in the PRACH), uplink reference signals, and the like.

The transmission signal generation section 302 generates downlink signals (downlink control signals, downlink

EP 3 833 118 A1

data signals, downlink reference signals, and the like) based on commands from the control section 301, and outputs these signals to the mapping section 303. The transmission signal generation section 302 can be constituted by a signal generator, a signal generating circuit, or signal generation apparatus that can be described based on general understanding of the technical field to which the present disclosure pertains.

The transmission signal generation section 302 generates DCI based on commands from the control section 301, for example. The DCI is, for example, at least one of DL assignment for reporting downlink data allocation information, UL grant for reporting uplink data allocation information, DCI including SFI, and the like. Also, the downlink data signals are subjected to the coding process, the modulation process, and the like, by using coding rates and modulation schemes that are determined based on, for example, channel state information (CSI) reported from each user terminal 20. The downlink data signal may include information configured by higher layer signaling.

The mapping section 303 maps the downlink signals generated in the transmission signal generation section 302 to predetermined radio resources based on commands from the control section 301, and outputs these to the transmitting/receiving sections 103. The mapping section 303 can be constituted by a mapper, a mapping circuit or mapping apparatus that can be described based on general understanding of the technical field to which the present disclosure pertains.

The received signal processing section 304 performs receiving processes (for example, demapping, demodulation, decoding, and the like) of received signals that are input from the transmitting/receiving sections 103. Here, the received signals include, for example, uplink signals transmitted from the user terminals 20 (uplink control signals, uplink data signals, uplink reference signals, etc.). The received signal processing section 304 can be constituted by a signal processor, a signal processing circuit, or signal processing apparatus that can be described based on general understanding of the technical field to which the present disclosure pertains.

The received signal processing section 304 outputs, to the control section 301, information decoded by the receiving processing. For example, when a PUCCH to contain an HARQ-ACK is received, the received signal processing section 304 outputs this HARQ-ACK to the control section 301. Also, the received signal processing section 304 outputs the received signals and/or the signals after the receiving processes to the measurement section 305.

The measurement section 305 conducts measurements with respect to the received signals. The measurement section 305 can be constituted by a measurer, a measurement circuit, or measurement apparatus that can be described based on general understanding of the technical field to which the present disclosure pertains.

For example, the measurement section 305 may perform RRM (Radio Resource Management) measurements, CSI (Channel State Information) measurements, and the like, based on the received signals. The measurement section 305 may measure the received power (for example, RSRP (Reference Signal Received Power)), the received quality (for example, RSRQ (Reference Signal Received Quality), SINR (Signal to Interference plus Noise Ratio), SNR (Signal to Noise Ratio), etc.), the signal strength (for example, RSSI (Received Signal Strength Indicator)), transmission path information (for example, CSI), and the like. The measurement results may be output to the control section 301.

The transmitting/receiving sections 103 may transmit a plurality of pieces of downlink control information corresponding to each of the plurality of uplink channels (uplink control channels (PUCCHs) or uplink shared channels (PUSCHs)). Each of the plurality of pieces of downlink control information may include information indicating an uplink channel resource (PUCCH resource or PUSCH resource) and a transmission power control (TPC) command. The transmitting/receiving sections 103 may transmit a downlink shared channel (PDSCH) corresponding to each of the plurality of pieces of downlink control information. The transmitting/receiving sections 103 may receive a plurality of uplink channels.

<User Terminal>

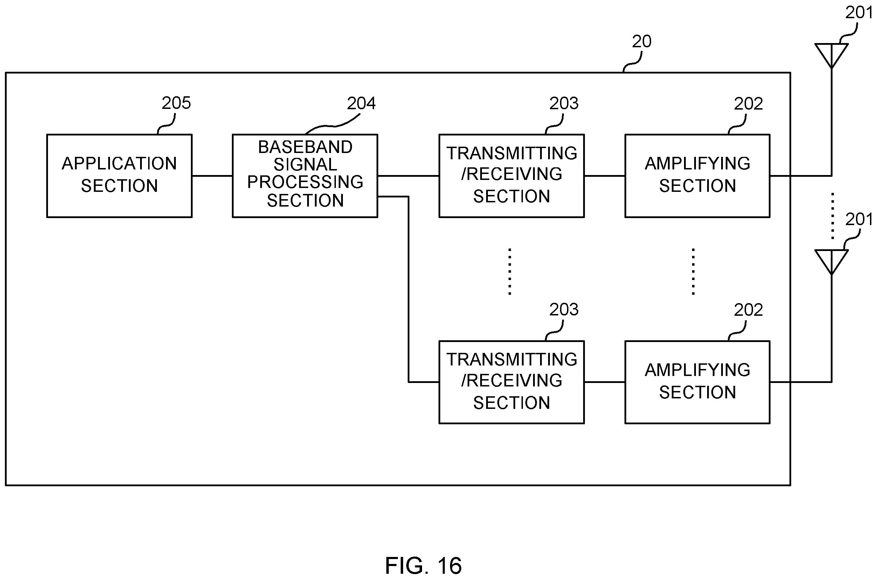

Fig. 16 is a diagram showing an example of an overall structure of the user terminal according to the present embodiment. A user terminal 20 has a plurality of transmitting/receiving antennas 201, amplifying sections 202, transmitting/receiving sections 203, a baseband signal processing section 204, and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. The transmitting/receiving section 203 can be constituted by a transmitters/receiver, a transmitting/receiving circuit, or transmitting/receiving apparatus that can be described based on general understanding of the technical field to which the present disclosure pertains. Note that a transmitting/receiving section 203 may be structured as a transmitting/receiving section in one entity, or may be constituted by a transmitting section and a receiving section.

The baseband signal processing section 204 performs receiving processes for the baseband signal that is

18

input, including an FFT process, error correction decoding, a retransmission control receiving process, and the like. Downlink user data is forwarded to the application section 205. The application section 205 performs processes related to higher layers above the physical layer and the MAC layer, and the like. Also, in the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process, and the like, and the result is forwarded to the transmitting/receiving section 203.

Baseband signals that are output from the baseband signal processing section 204 are converted into a radio frequency band in the transmitting/receiving sections 203 and transmitted. The radio frequency signals having been subjected to frequency conversion in the transmitting/receiving sections 203 are amplified in the amplifying sections 202, and transmitted from the transmitting/receiving antennas 201.

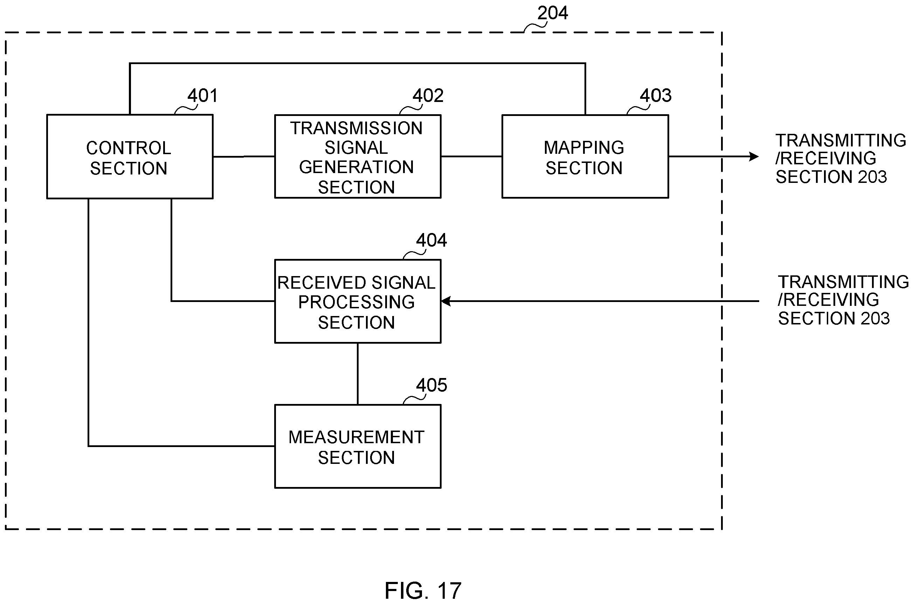

Fig. 17 is a diagram showing an example of a functional configuration of the user terminal according to the present embodiment. Note that, although this example will primarily show functional blocks that pertain to characteristic parts of the present embodiment, it may be assumed that the user terminal 20 has other functional blocks that are necessary for radio communication as well.

The baseband signal processing section 204 provided in the user terminal 20 at least has a control section 401, a transmission signal generation section 402, a mapping section 403, a received signal processing section 404, and a measurement section 405. Note that these configurations may be included in the user terminal 20, and some or all of the configurations need not be included in the baseband signal processing section 204.

The control section 401 controls the whole of the user terminal 20. The control section 401 can be constituted by a controller, a control circuit, or control apparatus that can be described based on general understanding of the technical field to which the present disclosure pertains.

The control section 401, for example, controls the generation of signals in the transmission signal generation section 402, the allocation of signals in the mapping section 403, and the like. Furthermore, the control section 401 controls the signal receiving processing in the received signal processing section 404, the measurements of signals in the measurement section 405, and the like.

The control section 401 acquires the downlink control signals and downlink data signals transmitted from the radio base station 10, via the received signal processing section 404. The control section 401 controls the generation of uplink control signals and/or uplink data signals based on the results of deciding whether or not retransmission control is necessary for the downlink control signals and/or downlink data signals, and the like.

Furthermore, when the control section 401 has acquired various types of information reported from the radio base station 10 from the received signal processing section 404, the control section 401 may update the parameter used for control based on the information.

The transmission signal generation section 402 generates uplink signals (uplink control signals, uplink data signals, uplink reference signals, etc.) based on commands from the control section 401, and outputs these signals to the mapping section 403. The transmission signal generation section 402 can be constituted by a signal generator, a signal generating circuit, or signal generation apparatus that can be described based on general understanding of the technical field to which the present disclosure pertains.

For example, the transmission signal generation section 402 generates uplink control signals such as delivery acknowledgement information, channel state information (CSI), and the like, based on commands from the control section 401. Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and output the result to the transmitting/receiving section 203. The mapping section 403 can be constituted by a mapper, a mapping circuit, or mapping apparatus that can be described based on general understanding of the technical field to which the present disclosure pertains.

The received signal processing section 404 performs receiving processes (for example, demapping, demodulation, decoding, and the like) of received signals that are input from the transmitting/receiving sections 203. Here, the received signals include, for example, downlink signals (downlink control signals, downlink data signals, downlink reference signals, and the like) that are transmitted from the radio base station 10. The received signal processing section 404 can be constituted by a signal processor, a signal processing circuit, or signal processing apparatus that can be described based on general understanding of the technical field to which the present disclosure pertains. Also, the received signal processing section 404 can constitute the receiving section according to the present disclosure.

The received signal processing section 404 outputs the decoded information that is acquired through the receiving processing to the control section 401. The received signal processing section 404 outputs, for example, broadcast information, system information, RRC signaling, DCI, and the like, to the control section 401. Also, the received signal processing section 404 outputs the received signals and/or the signals after the receiving processes to the measurement section 405.

The measurement section 405 conducts measurements with respect to the received signals. The measurement section 405 can be constituted by a measurer, a measurement circuit, or measurement apparatus that can be described based on general understanding of the technical field to which the present disclosure pertains.

For example, the measurement section 405 may perform RRM measurements, CSI measurements, and the like based on the received signals. The measurement section 405 may measure the received power (for example, RSRP), the received quality (for example, RSRQ, SINR, SNR, etc.), the signal strength (for example, RSSI), transmission path information (for example, CSI), and the like. The measurement results may be output to the control section 401.

The transmitting/receiving sections 203 may receive a plurality of pieces of downlink control information corresponding to each of the plurality of uplink channels (uplink control channels (PUCCHs) or uplink shared channels (PUSCHs)). Each of the plurality of pieces of downlink control information may include information indicating an uplink channel resource (PUCCH resource or PUSCH resource) and a transmission power control (TPC) command. The transmitting/receiving sections 203 may receive a downlink shared channel (PDSCH) corresponding to each of the plurality of pieces of downlink control information. The transmitting/receiving sections 203 may transmit a plurality of uplink channels.

When the transmission order of the plurality of uplink channels (for example, PUCCH A and PUCCH B, or PUSCH A and PUSCH B) is different from the receiving order of corresponding downlink control information (for example, DCI A and DCI B), the control section 401 may determine at least one accumulated value of the TPC command for the plurality of uplink channels.

When the transmission order of the plurality of uplink channels is different from the receiving order of the corresponding downlink control information, the control section 401 may apply one accumulated value obtained by adding a TPC command in at least one downlink control information of the plurality of pieces of downlink control information to one accumulated value, to the plurality of uplink channels.

When the transmission order of the plurality of uplink channels is different from the receiving order of the corresponding downlink control information, the control section 401 may determine a plurality of accumulated values on the basis of the plurality of pieces of downlink control information, and apply the plurality of accumulated values to the plurality of uplink channels, respectively.

When the transmission order of the plurality of uplink channels is different from the receiving order of the corresponding downlink control information, and the transmitting/receiving sections 203 receive subsequent downlink control information (for example, DCI C) including the information indicating the resource of the subsequent uplink channel (for example, PUCCH C or PUSCH C) and the TPC command, the control section 401 may apply one accumulated value obtained by adding the TPC command in the subsequent downlink control information to one of the plurality of accumulated values, to the subsequent upstream channel.

When the transmission order of the plurality of uplink channels is different from the receiving order of the corresponding downlink control information, and the plurality of uplink channels correspond to a plurality of communication requirements (for example, eMBB or URLLC), the control section 401 may determine a plurality of accumulated values for the plurality of uplink channels, and apply the plurality of accumulated values to the plurality of uplink channels, respectively.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be achieved by a single apparatus physically or logically aggregated, or may be achieved by directly or indirectly connecting two or more physically or logically separate apparatuses (using wires, radio, or the like, for example) and using these plural apparatuses. The functional block may be realized by combining the one device or the plurality of devices with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, and deeming, broadcasting, notifying, communicating, forwarding, configuring, reconfiguring, allocating, mapping, and assigning. For example, a functional block (configuration unit) that causes transmission to function may be referred to as a transmitting section, a transmitter, or the like. In any case, as described above, the implementation method is not particularly limited.

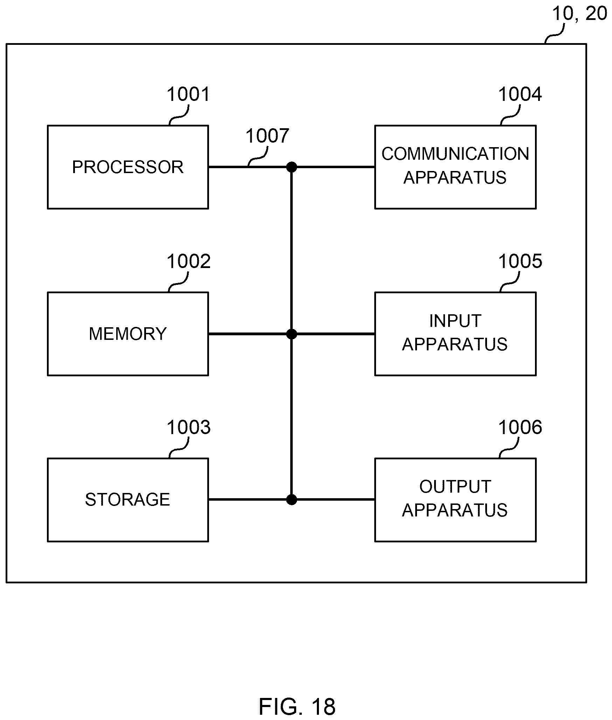

For example, the base station, the user terminal, and the like according to one embodiment of the present disclosure may function as a computer that executes the processing of the radio communication method of the present disclosure. Fig. 18 is a diagram showing an example of a hardware structure of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, and a bus 1007.

Note that, in the following description, the word "apparatus" may be replaced by "circuit", "device", "unit", and the like. The hardware structure of the base station 10 and the user terminal 20 may be designed to include one or more of each apparatus shown in the drawings, or may be designed not to include some apparatuses.

For example, although only one processor 1001 is shown, a plurality of processors may be provided. Furthermore, processes may be implemented with one processor, or processes may be implemented in sequence, or in different manners, on two or more processors. Note that the processor 1001 may be implemented with one or more chips.

Each function of the base station 10 and the user terminal 20 is implemented by reading predetermined software (program) on hardware such as the processor 1001 and the memory 1002, and by controlling the operation in the processor 1001, the communication in the communication apparatus 1004, and at least one of the reading and writing of data in the memory 1002 and the storage 1003.

The processor 1001 may control the whole computer by, for example, running an operating system. The processor 1001 may be configured with a central processing unit (CPU), which includes interfaces with a peripheral equipment, a control apparatus, a computing apparatus, a register, and the like. For example, the above-described baseband signal processing section 104 (204), call processing section 105, and the like may be implemented by the processor 1001.

Furthermore, the processor 1001 reads programs (program codes), software modules, or data, from at least one of the storage 1003 and the communication apparatus 1004, into the memory 1002, and executes various processing according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory), and/or other appropriate storage media. The memory 1002 may be referred to as a "register", a "cache", a "main memory (primary storage apparatus)", and the like. The memory 1002 can store a program (program code), a software module, and the like, which are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and the like), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus".

The communication apparatus 1004 is hardware (transmitting/receiving device) for performing inter-computer communication via at least one of a wired network and a wireless network, and for example, is referred to as "network device", "network controller", "network card", "communication module", and the like. The communication apparatus 1004 may be configured to include a high frequency switch, a duplexer, a filter, a frequency synthesizer, and the like in order to realize, for example, at least one of frequency division duplex (FDD) and time division duplex (TDD). For example, the above-described transmitting/receiving antennas 101 (201), amplifying sections 102 (202), transmitting/receiving sections 103 (203), communication path interface 106, and the like may be implemented by the communication apparatus 1004. The transmitting/receiving section 103 may be implemented by physically or logically separating a transmitting section 103a and a receiving section 103b.

The input apparatus 1005 is an input device for receiving input from the outside (for example, a keyboard, a mouse, a microphone, a switch, a button, a sensor, and the like). The output apparatus 1006 is an output device for allowing sending output to the outside (for example, a display, a speaker, an LED (Light Emitting Diode) lamp, and the like). Note that the input apparatus 1005 and the output apparatus 1006 may be provided in an integrated structure (for example, a touch panel).

Furthermore, these pieces of apparatus, including the processor 1001, the memory 1002, and the like are connected by the bus 1007 so as to communicate information. The bus 1007 may be formed with a single bus, or may be formed with buses that vary between pieces of apparatus.

Also, the base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array), and the like, and part or all of the functional blocks may be implemented by the hardware. For example, the processor 1001 may be implemented with at least one of these pieces of hardware.

(Variations)

Note that the terminology used in the present disclosure and the terminology that is needed to understand the present disclosure may be replaced by other terms that convey the same or similar meanings. For example, "channels" and "symbols" may be replaced by "signals" (or "signaling"). Also, "signals" may be replaced by "messages". A reference signal may be abbreviated as an "RS", and may be referred to as a "pilot", a "pilot signal" and the like, depending on which standard applies. Furthermore, a "component carrier (CC)" may be referred to as a "cell", a "frequency carrier", a "carrier frequency", and the like.

A radio frame may be comprised of one or more periods (frames) in the time domain. Each of one or more periods (frames) constituting a radio frame may be referred to as a "subframe". Furthermore, a subframe may be comprised of one or multiple slots in the time domain. A subframe may be a fixed time duration (for example, 1 ms) that is not dependent on numerology.

Here, the numerology may be a communication parameter used for at least one of transmission and reception of a certain signal or channel. For example, the numerology may indicate at least one of SubCarrier Spacing (SCS), a bandwidth, a symbol length, a cyclic prefix length, a transmission time interval (TTI), the number of symbols per TTI, a radio frame structure, specific filtering processing to be performed by a transceiver in the frequency domain, specific windowing processing to be performed by a transceiver in the time domain, and the like.

A slot may be comprised of one or more symbols in the time domain (OFDM (Orthogonal Frequency Division Multiplexing) symbols, SC-FDMA (Single Carrier Frequency Division Multiple Access) symbols, and the like). Also, a slot may be a time unit based on numerology.

A slot may include a plurality of mini slots. Each mini slot may be comprised of one or more symbols in the time domain. Also, a mini slot may be referred to as a "subslot". Each mini slot may be comprised of fewer symbols than a slot. A PDSCH (or PUSCH) transmitted in a time unit larger than a mini slot may be referred to as PDSCH (PUSCH) mapping type A. A PDSCH (or PUSCH) transmitted using a mini slot may be referred to as "PDSCH (PUSCH) mapping type B".

A radio frame, a subframe, a slot, a mini slot, and a symbol all represent the time unit in signal communication. A radio frame, a subframe, a slot, a mini slot, and a symbol may be each called by other applicable names. Note that time units such as a frame, a subframe, a slot, a mini slot, and a symbol in the present disclosure may be replaced with each other.

For example, one subframe may be referred to as a "transmission time interval (TTI)", or a plurality of consecutive subframes may be referred to as a "TTI", or one slot or one mini slot may be referred to as a "TTI". That is, at least one of a subframe and a TTI may be a subframe (1 ms) in existing LTE, may be a shorter period than 1 ms (for example, 1 to 13 symbols), or may be a longer period of time than 1 ms. Note that the unit to represent the TTI may be referred to as a "slot", a "mini slot", and the like, instead of a "subframe".

Here, a TTI refers to the minimum time unit of scheduling in radio communication, for example. For example, in LTE systems, the base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks, codewords and the like, or may be the unit of processing in scheduling, link adaptation, and the like. Note that when TTI is given, a time interval (for example, the number of symbols) in which the transport blocks, the code blocks, the codewords, and the like are actually mapped may be shorter than TTI.

Note that, when one slot or one mini slot is referred to as a "TTI", one or more TTIs (that is, one or multiple slots or one or more mini slots) may be the minimum time unit of scheduling. Also, the number of slots (the number of mini slots) to constitute this minimum time unit of scheduling may be controlled.

TTI having a time length of 1 ms may be called usual TTI (TTI in LTE Rel. 8 to 12), normal TTI, long TTI, a usual subframe, a normal subframe, a long subframe, a slot, or the like. A TTI that is shorter than a usual TTI may be referred to as "shortened TTI", "short TTI", "partial TTI" (or "fractional TTI"), "shortened subframe", "short subframe", "mini slot", "sub-slot", "slot", or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and may be 12, for example. The number of subcarriers included in the RB may be determined based on numerology.

Also, an RB may include one or more symbols in the time domain, and may be one slot, one mini slot, one subframe, or one TTI in length. One TTI, one subframe, and the like each may be comprised of one or more resource blocks.

Note that one or more RBs may be referred to as a "physical resource block (PRB (Physical RB))", a "subcarrier group (SCG)", a "resource element group (REG)", a "PRB pair", an "RB pair", and the like.

Furthermore, a resource block may be comprised of one or more resource elements (REs). For example, one RE may be a radio resource field of one subcarrier and one symbol.

The bandwidth part (BWP) (which may be called partial bandwidth etc.) may represent a subset of consecutive common RB (common resource blocks) for a certain numerology in a certain carrier. Here, the common RB may be specified by the index of the RB based on a common reference point of the carrier. The PRB may be defined in a BWP and numbered within that BWP.

The BWP may include a BWP for UL (UL BWP) and a BWP for DL (DL BWP). For the UE, one or more BWPs may be configured within one carrier.

At least one of the configured BWPs may be active, and the UE may not assume to transmit or receive a predetermined signal/channel outside the active BWP. Note that "cell", "carrier", and the like in the present disclosure may be read as "BWP".

Note that the structures of radio frames, subframes, slots, mini slots, symbols, and the like described above are merely examples. For example, configurations pertaining to the number of subframes included in a radio frame, the number of slots included in a subframe, the number of mini-slots included in a slot, the number of symbols and RBs included in a slot or a mini slot, the number of subcarriers included in an RB, the number of symbols in a TTI, the symbol duration, the length of cyclic prefixes (CPs), and the like can be variously changed.

Also, the information and parameters described in the present disclosure may be represented in absolute values or in relative values with respect to predetermined values, or may be represented using other applicable information. For example, a radio resource may be specified by a predetermined index.

The names used for parameters and the like in the present disclosure are in no respect limiting. In addition, an equation and the like using these parameters may differ from those explicitly disclosed in the present disclosure. Since various channels (PUCCH (Physical Uplink Control Channel), PDCCH (Physical Downlink Control Channel) and the like) and information elements can be identified by any suitable names, the various names assigned to these individual channels and information elements are in no respect limiting.

The information, signals, and/or others described in the present disclosure may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals and the like can be output in at least one of a direction from higher layers to lower layers and a direction from lower layers to higher layers. Information, signals, and the like may be input and output via a plurality of network nodes.

The information, signals, and the like that are input and/or output may be stored in a specific location (for example, in a memory), or may be managed in a control table. The information, signals, and the like to be input and/or output can be overwritten, updated or appended. The information, signals, and the like that are output may be deleted. The information, signals, and the like that are input may be transmitted to other pieces of apparatus.

The reporting of information is by no means limited to the aspects/embodiments described in the present disclosure, and may be performed using other methods. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs), and the like), MAC (Medium Access Control) signaling), other signals, or combinations of these.

Note that physical layer signaling may be referred to as "L1/L2 (Layer 1/Layer 2) control information (L1/L2 control signals)", "L1 control information (L1 control signal)", and the like. Also, RRC signaling may be referred to as "RRC messages", and can be, for example, an RRC connection setup (RRCConnectionSetup) message, RRC connection reconfiguration (RRCConnectionReconfiguration) message, and the like. Also, MAC signaling may be reported using, for example, MAC control elements (MAC CEs (Control Elements)) .

Also, reporting of predetermined information (for example, reporting of information to the effect that "X holds") does not necessarily have to be sent explicitly, and can be sent implicitly (for example, by not reporting this piece of information, by reporting another piece of information, and the like).

Decisions may be made in values represented by one bit (0 or 1), may be made in Boolean values that represent true or false, or may be made by comparing numerical values (for example, comparison against a predetermined value).

Software, whether referred to as "software", "firmware", "middleware", "microcode" or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions, and the like.

Also, software, commands, information, and the like may be transmitted and received via communication media. For example, when software is transmitted from a website, a server or other remote sources by using at least one of wired technologies (coaxial cables, optical fiber cables, twisted-pair cables, digital subscriber lines (DSLs), and the like) and wireless technologies (infrared radiation, microwaves, and the like), at least one of these wired technologies and wireless technologies are also included in the definition of communication media.

The terms "system" and "network" as used in the present disclosure are used interchangeably.

In the present disclosure, the terms such as "precoding", "precoder", "weight (precoding weight)", "quasi-co-location (QCL)", "transmission configuration indication state (TCI state))", "spatial relation", "spatial domain filter", "transmission power", "phase rotation", "antenna port", "antenna port group", "layer", " "number of layers", "rank", "beam", "beam width", "beam angle", "antenna", "antenna element", and "panel" may be used interchangeably.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" may be used interchangeably. The base station may be called a term such as a macro cell, a small cell, a femto cell, a pico cell, and the like.

A base station can accommodate one or more (for example, three) cells. When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to all or part of the coverage area of at least one of a base station and a base station subsystem that provides communication services within this coverage.

In the present disclosure, the terms "mobile station (MS)", "user terminal", "user equipment (UE)", "terminal", and the like may be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of a base station and a mobile station may be referred to as transmitting apparatus, receiving apparatus, communication apparatus, and the like. Note that at least one of the base station and the mobile station may be a device mounted on a mobile unit, a mobile unit itself, or the like. The moving body may be a transportation (for example, a car, an airplane and the like), an unmanned moving body (for example, a drone, an autonomous car and the like), or a (manned or unmanned) robot. Note that at least one of the base station and the mobile station also includes a device that does not necessarily move during a communication operation. For example, at least one of the base station and the mobile station may be an IoT (Internet of Things) device such as a sensor.

Furthermore, the base stations in the present disclosure may be read as the user terminal. For example, each aspect/embodiment of the present disclosure may be applied to a structure in which communication between the base station and the user terminal is replaced by communication among a plurality of user terminal (which may be referred to as, for example, D2D (Device-to-Device), V2X (Vehicle-to-Everything), and the like). In this case, the user terminal 20 may have the functions of the base station 10 described above. In addition, the wording such as "up" and "down" may be replaced with the wording corresponding to the terminal-to-terminal communication (for example, "side"). For example, an uplink channel, and a downlink channel may be interpreted as a side channel.

Likewise, the user terminal in the present disclosure may be interpreted as the base station. In this case, the base station 10 may have the functions of the user terminal 20 described above.

Certain actions that have been described in the present disclosure to be performed by base stations may, in some cases, be performed by their upper nodes. In a network comprised of one or more network nodes with base stations, it is clear that various operations that are performed so as to communicate with terminals can be performed by base stations, one or more network nodes (for example, MMEs (Mobility Management Entities), S-GWs (Serving-Gateways) and the like may be possible, but these are not limiting) other than base stations, or combinations of these.

The aspects/embodiments shown in the present disclosure may be used individually or in combinations, which may be switched depending on the mode of implementation. The order of processes, sequences, flowcharts, and the like that have been used to describe the aspects/embodiments in the present disclosure may be re-ordered as long as inconsistencies do not arise. For example, although various methods have been shown in the present disclosure with various components of steps using exemplary orders, the specific orders that are shown herein are by no means limiting.

The aspects/embodiments shown in the present disclosure may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods, and/or next generation systems that are enhanced based on these. Further, a plurality of systems may be combined and applied (for example, a combination of LTE or LTE-A and 5G).

The phrase "based on" as used in the present disclosure does not mean "based only on", unless otherwise specified. In other words, the phrase "based on" means both "based only on" and "based at least on".

Reference to elements with designations such as "first", "second", and the like as used in the present disclosure does not generally limit the number/quantity or order of these elements. These designations are used in the present disclosure only for convenience, as a method for distinguishing between two or more elements. In this way, reference to the first and second elements does not imply that only two elements may be employed, or that the first element must precede the second element in some way.

The terms "judge" and "determine" as used in the present disclosure may encompass a wide variety of actions. For example, "determining" may be regarded as judging, calculating, computing, processing, deriving, investigating, looking up, search, inquiry (for example, looking up in a table, database, or another data structure), ascertaining, and the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory), and the like.

In addition, to "judge" and "determine" as used herein may be interpreted to mean making judgements and determinations related to resolving, selecting, choosing, establishing, comparing, and the like. In other words, to "judge" and "determine" as used herein may be interpreted to mean making judgements and determinations related to some action.

In addition, to "judge" and "determine" as used herein may be interpreted to mean "assuming", "expecting", "considering", and the like.

The term "maximum transmit power" described in the present disclosure may mean the maximum value of transmit power, the nominal UE maximum transmit power, or the rated UE maximum transmit power.

As used in the present disclosure, the terms "connected" and "coupled", or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced by "access".

As used in the present disclosure, when two elements are connected, these elements may be considered "connected" or "coupled" to each other by using one or more electrical wires, cables, printed electrical connections, and the like, and, as some non-limiting and non-inclusive examples, by using electromagnetic energy, such as electromagnetic energy having wavelengths in the radio frequency, microwave, and optical (both visible and invisible) domains.

In the present disclosure, the phrase "A and B are different" may mean "A and B are different from each other". Note that the term may mean that "A and B are different from C". The terms such as "leave", "coupled", and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive disjunction.

In the present disclosure, where translations add articles, such as a, an, and the in English, the present disclosure may include that the noun that follows these articles is in the plural.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A user terminal comprising:

a receiving section that receives a plurality of pieces of downlink control information corresponding to a plurality of uplink channels, respectively, each of the plurality of pieces of downlink control information including information indicating a resource of the uplink channels and a transmission power control (TPC) command; and

a control section that, when a transmission order of the plurality of uplink channels is different from a receiving order of the corresponding downlink control information, determines at least one accumulated value of the TPC command for the plurality of uplink channels.

2. The user terminal according to claim 1, wherein, when the transmission order of the plurality of uplink channels is different from the receiving order of the corresponding downlink control information, the control section applies one accumulated value obtained by adding a TPC command in at least one downlink control information of the plurality of pieces of downlink control information to one accumulated value, to the plurality of uplink channels.

3. The user terminal according to claim 1, wherein, when the transmission order of the plurality of uplink channels is different from the receiving order of the corresponding downlink control information, the control section determines a plurality of accumulated values based on the plurality of pieces of downlink control information, and applies the plurality of accumulated values to the plurality of uplink channels, respectively.

4. The user terminal according to claim 3, wherein, when the transmission order of the plurality of uplink channels is different from the receiving order of the corresponding downlink control information, and the receiving section receives subsequent downlink control information including information indicating a resource of a subsequent uplink channel and a TPC command after transmission of the plurality of uplink channels, the control section applies one accumulated value obtained by adding the TPC command in the subsequent downlink control information to one of the plurality of accumulated values, to the subsequent uplink channel.

5. The user terminal according to claim 1, wherein, when the transmission order of the plurality of uplink channels is different from the receiving order of the corresponding downlink control information, and the plurality of uplink channels correspond to a plurality of communication requirements, the control section determines a plurality of accumulated values for the plurality of uplink channels, and applies the plurality of accumulated values to the plurality of uplink channels, respectively.

6. A radio communication method of a user terminal, the method comprising steps of:

receiving a plurality of pieces of downlink control information corresponding to a plurality of uplink channels, respectively, each of the plurality of pieces of downlink control information including information indicating a resource of the uplink channels and a transmission power control (TPC) command; and
when a transmission order of the plurality of uplink channels is different from a receiving order of the corresponding downlink control information, determining at least one accumulated value of the TPC command for the plurality of uplink channels.

FIG. 1A

PDCCH A
TPC COMMAND

PDCCH B
TPC COMMAND

PUCCH A

PDSCH A

PDSCH B

PUCCH B

FREQUENCY

SLOT

TIME

FIG. 1B

PDCCH A
TPC COMMAND

PDCCH B
TPC COMMAND

PUCCH B

PDSCH A

PDSCH B

PUCCH A

FREQUENCY

SLOT

TIME

EP 3 833 118 A1

FIG. 2A

PDCCH A
TPC COMMAND

PDCCH B
TPC COMMAND

PUSCH A

PUSCH B

FREQUENCY

TIME

FIG. 2B

PDCCH A
TPC COMMAND

PDCCH B
TPC COMMAND

PUSCH B

PUSCH A

FREQUENCY

TIME

FIG. 3

EP 3 833 118 A1

FIG. 4A

PDCCH A
TPC COMMAND
= P(A)

PUCCH Z
TRANSMISSION POWER
= P

PDCCH B
TPC COMMAND
= P(B)

PUCCH B
TRANSMISSION POWER
= P + P(A)

PDCCH Z

PDSCH Z

PDSCH A

PDSCH B

PUCCH A
TRANSMISSION POWER
= P + P(A)

SLOT

TIME

FIG. 4B

PDCCH A
TPC COMMAND
= P(A)

PUCCH Z
TRANSMISSION POWER
= P

PDCCH B
TPC COMMAND
= P(B)

PUCCH B
TRANSMISSION POWER
= P + P(B)

PDCCH Z

PDSCH Z

PDSCH A

PDSCH B

PUCCH A
TRANSMISSION POWER
= P + P(B)

TIME

EP 3 833 118 A1

PDCCH Z

PDSCH Z

PUCCH Z
TRANSMISSION POWER
= P

PDCCH A
TPC COMMAND
= P(A)

PDSCH A

PDCCH B
TPC COMMAND
= P(B)

PDSCH B

PUCCH B
TRANSMISSION POWER
= P + P(B)

PUCCH A
TRANSMISSION POWER
= P + P(A)

SLOT

TIME

PDCCH C
TPC COMMAND
= P(C)

PDSCH C

PUCCH A
TPC COMMAND
= P + P(A) + P(C)

FIG. 5

FIG. 6

## FIG. 7A

PDCCH Z

PDSCH Z

PUCCH Z
TRANSMISSION POWER
= P

PDCCH A
TPC COMMAND
= P(A)

PDSCH A

PDCCH B
TPC COMMAND
= P(B)

PDSCH B

PUCCH B
TRANSMISSION POWER
FOR URLLC = P + P(B)

PUCCH A
TRANSMISSION POWER
FOR eMBB = P + P(A)

SLOT

TIME

## FIG. 7B

PDCCH Z

PDSCH Z

PUCCH Z
TRANSMISSION POWER
= P

PDCCH A
TPC COMMAND
= P(A)

PDSCH A

PDCCH B
TPC COMMAND
= P(B)

PDSCH B

PUCCH B
TRANSMISSION POWER
FOR URLLC = P + P(A) + P(B)

PUCCH A
TRANSMISSION POWER
FOR eMBB = P + P(B)

TIME

PDCCH Z

PUSCH Z
TRANSMISSION POWER
= P

PDCCH A
TPC COMMAND
= P(A)

PDCCH B
TPC COMMAND
= P(B)

PUSCH B
TRANSMISSION POWER
= P + P(A) + P(B)

PUSCH A
TRANSMISSION POWER
= P + P(A) + P(B)

SLOT

TIME

FIG. 8

EP 3 833 118 A1

FIG. 9A

PDCCH A
TPC COMMAND
= P(A)

PDCCH Z

PUSCH Z
TRANSMISSION POWER
= P

PDCCH B
TPC COMMAND
= P(B)

PUSCH B
TRANSMISSION POWER
= P + P(A)

PUSCH A
TRANSMISSION POWER
= P + P(A)

SLOT

TIME

FIG. 9B

PDCCH A
TPC COMMAND
= P(A)

PDCCH Z

PUSCH Z
TRANSMISSION POWER
= P

PDCCH B
TPC COMMAND
= P(B)

PUSCH B
TRANSMISSION POWER
= P + P(B)

PUSCH A
TRANSMISSION POWER
= P + P(B)

TIME

EP 3 833 118 A1

FIG. 10

FIG. 11

## FIG. 12A

PDCCH Z

PUSCH Z
TRANSMISSION POWER
= P

PDCCH A
TPC COMMAND
= P(A)

PDCCH B
TPC COMMAND
= P(B)

PUSCH B
TRANSMISSION POWER
FOR URLLC = P + P(B)

PUSCH A
TRANSMISSION POWER
FOR eMBB = P + P(A)

SLOT

TIME

## FIG. 12B

PDCCH Z

PUSCH Z
TRANSMISSION POWER
= P

PDCCH A
TPC COMMAND
= P(A)

PDCCH B
TPC COMMAND
= P(B)

PUSCH B
TRANSMISSION POWER
FOR URLLC = P + P(A) + P(B)

PUSCH A
TRANSMISSION POWER
FOR eMBB = P + P(B)

TIME

EP 3 833 118 A1

FIG. 13

FIG. 14

FIG. 15

FIG. 16

APPLICATION SECTION — 205

BASEBAND SIGNAL PROCESSING SECTION — 204

TRANSMITTING /RECEIVING SECTION — 203

AMPLIFYING SECTION — 202

201

20

TRANSMITTING /RECEIVING SECTION — 203

AMPLIFYING SECTION — 202

201

FIG. 17

EP 3 833 118 A1

10, 20

```
                                          1004
      1001                                 ⌇
       ⌇         1007        ┌─────────────────────┐
  ┌──────────────┐  ⌇        │   COMMUNICATION     │
  │              │            │    APPARATUS        │
  │  PROCESSOR   │────────●───│                     │
  │              │            └─────────────────────┘
  └──────────────┘            
                  │
      1002        │                       1005
       ⌇          │                        ⌇
  ┌──────────────┐│           ┌─────────────────────┐
  │              ││           │      INPUT          │
  │   MEMORY     │────────●───│    APPARATUS        │
  │              ││           │                     │
  └──────────────┘│           └─────────────────────┘
                  │
      1003        │                       1006
       ⌇          │                        ⌇
  ┌──────────────┐│           ┌─────────────────────┐
  │              ││           │     OUTPUT          │
  │   STORAGE    │────────●───│    APPARATUS        │
  │              ││           │                     │
  └──────────────┘            └─────────────────────┘
```

FIG. 18

## INTERNATIONAL SEARCH REPORT

| International application No. |
| --- |
| PCT/JP2018/029137 |

A. CLASSIFICATION OF SUBJECT MATTER
Int.Cl. H04W52/22(2009.01)i, H04W52/08(2009.01)i, H04W52/54(2009.01)i, H04W72/12(2009.01)i

According to International Patent Classification (IPC) or to both national classification and IPC

B. FIELDS SEARCHED

Minimum documentation searched (classification system followed by classification symbols)
Int.Cl. H04B7/24-7/26, H04W4/00-99/00

Documentation searched other than minimum documentation to the extent that such documents are included in the fields searched
Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | CATT, Remainning issues of Non-CA based power control, 3GPP TSG RAN WG1 #93 R1-1806303 [online], 25 May 2018 [retrieved on 18 September 2018], Internet <URL:http://www.3gpp.org/ftp/tsg_ran/WG1_RL1/TSGR1_93/Docs/R1-1806303.zip>, entire text | 1, 3-6<br>2 |
| Y | SAMSUNG, Corrections on UL power control, 3GPP TSG RAN WG1 #93 R1-1806743 [online], 25 May 2018 [retrieved on 18 September 2018], Internet <URL:http://www.3gpp.org/ftp/tsg_ran/WG1_RL1/TSGR1_93/Docs/R1-1806743.zip>, entire text | 2 |

☐  Further documents are listed in the continuation of Box C.          ☐  See patent family annex.

| | |
| --- | --- |
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| 18.09.2018 | 02.10.2018 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)